Europäisches Patentamt

European Patent Office

Office européen des brevets

(19)

(11) Veröffentlichungsnummer: **0 312 722 B1**

(12) # EUROPÄISCHE PATENTSCHRIFT

(45) Veröffentlichungstag der Patentschrift:
12.06.91 Patentblatt 91/24

(51) Int. Cl.$^5$: **B65D 47/34**, B05B 11/04, G01F 11/08

(21) Anmeldenummer: **88112923.3**

(22) Anmeldetag: **09.08.88**

(54) **Dosier- und Spraypumpe für flüssige oder viskose Stoffe.**

(30) Priorität: **28.08.87 DE 3728770**

(43) Veröffentlichungstag der Anmeldung:
26.04.89 Patentblatt 89/17

(45) Bekanntmachung des Hinweises auf die Patenterteilung:
12.06.91 Patentblatt 91/24

(84) Benannte Vertragsstaaten:
**AT BE CH FR GB IT LI NL SE**

(56) Entgegenhaltungen:
**DE-A- 2 842 073
DE-A- 3 236 552
DE-A- 3 509 178
GB-A- 1 599 744**

(73) Patentinhaber: **Raimund Andris GmbH & Co. KG
Spohnplatzstrasse 5
W-7730 Villingen-Schwenningen 22 (DE)**

(72) Erfinder: **Andris, Raimund
Tannhörnle 9
W-7730 Villingen-Schwenningen 22 (DE)**

(74) Vertreter: **Neymeyer, Franz, Dipl.-Ing. (FH)
Haselweg 20
W-7730 Villingen 24 (DE)**

## Beschreibung

Die Erfindung betrifft eine Dosier- und Spraypumpe zur Abgabe dosierter Mengen flüssiger oder niederviskoser Stoffe aus flaschen- oder dosenartigen Behältern mit einem Faltenbalg aus elastischem Kunststoff, der verbindend zwischen zwei Gehäuseteilen aus formstabilem Kunststoff angeordnet ist, die in axialer Richtung teleskopartig zwischen zwei Hubbegrenzungen gegeneinander beweglich und durch die axialen Rückstellkräfte des Faltenbalgs rückstellbar sind, wobei wenigstens am ausgangseitigen Ende des Faltenbalgs ein Pumpenventil mit einem beweglichen Schließorgan angeordnet ist, welches während der Pumphübe des einen Gehäuseteils und des Faltenbalgs selbsttätig in Ansaugrichtung öffnet und in Rücklaufrichtung schließt, und wobei ein Gehäuseteil mit einem Ausgabemundstück versehen ist und ein Gehäuseteil mittels eines Verbindungsteils auf den Hals des Behälters aufsetzbar oder mit einem angeformten Behälter versehen ist.

Bei einer solchen bekannten Faltenbalg-Dosierpumpe für pastöse Stoffe (DE-OS 35 09 178) sind die beiden gegeneinander axial verschiebbaren Gehäuseteile jeweils mit einer rechtwinklig zur Achse des Faltenbalgs verlaufenden Querwand versehen. Diese Querwände weisen auf den einander zugekehrten Seiten jeweils Ringrippen zur dichtenden Aufnahme je eines Faltenbalgendes auf. Außerdem sind in den beiden Querwänden Bohrungen mit Ventilsitzringflächen und die dazugehörigen Schließorgane der Pumpenventile angeordnet. Während die Querwand des mit dem Ausgabemundstück versehenen Gehäuseteils mit einem in den Faltenbalg hineinragenden Rohrstutzen zur Führung des Schließorgans des ausgabeseitigen Pumpenventils versehen ist, besitzt die Querwand des anderen Gehäuseteils einen auf der dem Faltenbalg gegenüberliegenden Seite angeordneten Rohrstutzen zur Führung des Schließorgans des ansaugseitigen Pumpenventils. Zugleich ist dieser Rohrstutzen mit einem im Durchmesser verjüngten Ansatz zur Befestigung eines Ansaugschlauches versehen. Beide Gehäuseteile weisen zylindrische Führungswände auf, die teleskopartig ineinander ragen, wobei der eine Gehäuseteil in einem außerhalb der Querwand liegenden Bereich mit einem Innengewinde versehen ist, durch welches er z.B. auf das Außengewinde eines Flaschen- oder Dosenhalses aufgeschraubt werden kann. Während das Schließorgan des ansaugseitigen Pumpenventils lose mittels sternförmig angeordneter Rippen im Rohransatz der behälterseitigen Querwand geführt und durch krallenartige, in das Innere des Faltenbalgs hineinragende Finger gegen Herausfallen gesichert ist, weist das Schließorgan des ausgabeseitigen Pumpenventils einstückig angeformte Federorgane auf, welche das Schließorgan mit geringem axialem Druck auf die Ventilsitzfläche drücken und in Schließlage halten.

Es sind somit beide Pumpenventile mit axial beweglichen Schließorganen versehen, die jeweils als separate Einzelteile hergestellt und montiert werden müssen und deren Ventilsitzringflächen jeweils an einem der beiden Gehäuseteile angebracht sind.

Um solche Dosierpumpen, die in sehr hohen Stückzahlen (millionenfach) als Massenartikel hergestellt werden, durch Einsparen von Einzelteilen und Senken der Montagekosten billiger herstellen zu können, ist bereits vorgeschlagen worden, den beweglichen Schließorganen der beiden Pumpenventile, insbesondere aber des ausgabeseitigen Pumpenventils eine am Faltenbalg angeordnete Ventilsitzfläche zuzuordnen.

Man hat dadurch zwar erreicht, daß der mit dem Ausgabemundstück versehene Gehäuseteil einstückig hergestellt und als Fertigteil nach dem Aufsetzen des Schließorgans des ausgabeseitigen Pumpenventils auf die Ventilsitzringfläche des Faltenbalgs unter gleichzeitiger Herstellung seiner Verbindung mit dem Faltenbalg auf dem Gehäuseteil montiert werden kann, und man hat zudem den Vorteil besserer Dichtungsqualitäten erreicht, in dem das aus einem harten Kunststoff bestehende bewegliche Schließorgan auf dem relativ weichen Ventilsitz des aus elastischem Kunststoff bestehenden Faltenbalgs aufsitzt.

Nach wie vor sind aber auch bei diesen Pumpenventilen zwei axial bewegliche Schließorgane erforderlich, die separat hergestellt und montiert werden müssen.

Bei einer anderen bekannten Flüssigkeitspumpe mit Faltenbalg (GB-PS 1 599 744) ist zur manuellen Betätigung des Faltenbalgs ein Schwenkhebel vorgesehen, der einen Handgriffteil aufweist und der gegen eine geschlossene Stirnwand des Faltenbalgs drückt. Das gegenüberliegende, offene Ende des Faltenbalgs ist mit einer im wesentlichen ellipsenförmigen, planebenen Flanschwand versehen, die zwischen zwei aufeinandergesetzten Gehäusewänden eingespannt ist und die zwei zungenartig freigeschnittene Abschnitte aufweist, welche die Schließorgane eines Ansaug- und eines Ausgabeventils bilden. Dabei deckt der eine Abschnitt eine Ansaugbohrung des einen Gehäuseteils und der andere Abschnitt eine in einer Deckelwand angebrachte Radialnut ab, welche das Innere des Faltenbalgs mit einem Ausgabekanal verbindet. Obwohl die Schließorgane der beiden Ventile einstückig am einen Teil des Faltenbalgs angeformt sind, besteht diese bekannte Flüssigkeitspumpe aus insgesamt sieben Einzelteilen, die separat gefertigt und in kostenträchtiger Montagearbeit zusammengefügt werden müssen.

Dasselbe gilt auch für eine andere Ausführungsform dieser bekannten Flüssigkeitspumpe, bei der das offene Ende des Faltenbalgs mit einer manschettenartigen, radial dehnbaren Verlängerung versehen ist, welche einen nach innen ragenden Rohransatz des Gehäuses dichtend umschließt und zugleich als bewegliches Schließorgan des Auslaßventils wirkt. Bei dieser Ausführungsform ist das ansaugseitige Ventil in dem dafür besonders ausgebildeten Hals des Behälters angeordnet.

Der Erfindung liegt deshalb die Aufgabe zugrunde, eine Dosier- und Spraypumpe der gattungsgemäßen Art konstruktiv und insbesondere fertigungstechnisch noch weiter zu vereinfachen, so daß sie mit weniger Einzelteilen und vor allem mit geringerer Montagearbeit noch kostengünstiger hergestellt werden kann, und funktionell noch zu verbessern.

Gelöst wird diese Aufgabe erfindungsgemäß dadurch, daß der Faltenbalg an seinem einen Ende als axiale Verlängerung einen radial elastischen, hülsenartigen Ringwandabschnitt aufweist, der die Mantelfläche eines einstückig an dem die Pumphübe ausführenden Gehäuseteil angeformten, ring- oder topfförmigen Ansatzes ventilartig dichtend und radial abhebbar umschließt, und daß das andere Ende des Faltenbalgs mit einem wenigstens eine Durchlaßöffnung aufweisenden Stirnwandabschnitt versehen ist, der wenigstens eine Auslaßöffnung einer Gehäusestirnwand des zweiten Gehäuseteils ventilartig abdeckt oder den Ventilsitz für ein an einem im Faltenbalg angeordneten Verdrängungskörper angeformtes Ventilschließorgan bildet.

Der Hauptvorteil der erfindungsgemäßen Lösung ist darin zu sehen, daß die Pumpe sowohl für flüssige als auch für pastöse Stoffe verwendbar ist und daß die komplette Pumpe in ihrer einfachsten Ausführungsform aus nur drei Teilen, nämlich dem Faltenbalg und den beiden Gehäuseteilen besteht, die sich zudem auf sehr einfache Weise zu einer funktionsfähigen Pumpe zusammenfügen lassen. An beiden Faltenbalgenden sind die mit den beiden Gehäuseteilen in Verbindung stehenden Teile zugleich als Ventilorgane ausgebildet und zwar so, daß sie beim Zusammenfügen der drei Teile ohne weiteres in ihre funktionsgerechte Lage gebracht werden können, so daß sie die Verbindung zwischen dem Faltenbalg einerseits und den beiden Gehäuseteilen andererseits herstellen und zugleich die Ventilfunktionen eines Ansaug- und Auslaßventils ausüben können. Durch die erfindungsgemäße Ausgestaltung der ausgabeseitigen Verbindung zwischen dem Faltenbalg und dem Gehäuseteil mit dem Ausgabemundstück wird durch einstückig angeformte Teile auch eine sowohl für hohe Arbeitsdrücke, die z.B. zur Erzeugung einer Spraywirkung benötigt werden, als für niedrige Arbeitsdrücke, die bei pastösen Medien bevorzugt werden, geeignete Arbeitsweise ermöglicht.

Die Montage der Dosier- und Spraypumpe reduziert sich auf das Zusammenfügen des Faltenbalgs und der beiden Gehäuseteile. Dadurch ist eine erhebliche Verringerung der Herstellungskosten erzielt, die bei sehr hohen Stückzahlen, in denen solche Dosier- und Spraypumpen hergestellt werden, eine entsprechend hohe wirtschaftliche Bedeutung hat.

Die Ansprüche 2 bis 10 betreffen vorteilhafte Ausgestaltungen des ansaugseitigen Endes des Faltenbalgs als Ventilteil.

Während die Ausgestaltung nach Anspruch 2 den Vorteil aufweist, daß der das Schließorgan bildende Stirnwandabschnitt eine relativ hohe Schließkraft aufweist, die insbesondere bei pastösen Medien mit einer relativ niederigen Viskosität von Vorteil ist, ist das Vorsehen zungengartiger Stirnwandabschnitte als Schließorgane gemäß Anspruch 3 dann von Vorteil, wenn das auszugebende Medium eine etwas höhere Viskosität aufweist, weil die zungenförmigen Stirnwandabschnitte nur eine relativ schwache Eigenschließkraft aufweisen.

Durch die Ausgestaltungen der Erfindung nach den Ansprüchen 4, 5 und 6 lassen sich die Ventilfunktionen bezüglich der Leichtigkeit des Ansaugens und des sicheren Schließens der Auslaßöffnungen durch die Stirnwandabschnitte des Faltenbalgs optimal gestalten. Auch die Ausgestaltung des Anspruches 7 stellt eine Variante dar, die bei raltiv großem Ansaugquerschnitt ein sicheres Schließen des Ansaugventils in Rücklaufrichtung gewährleistet.

Durch die Ausgestaltungen der Erfindung nach den Ansprüchen 8 und 9 ist auch die Möglichkeit gegeben, flüssige Medien mit Hilfe der erfindungsgemäßen Dosierpumpe z.B. aus einer Flasche oder aus einem einstückig an einem Gehäuseteil angeformten Behälter dosiert abzugeben, wobei zudem der Vorteil besteht, daß in Verbindung mit den Ausgestaltungen der Erfindung nach den Ansprüchen 14 bis 19 bzw. 28 bis 34 und unter Verwendung einer Spraydüse ein Spray- oder Sprüheffekt erzielt werden kann.

Durch die Ausgestaltung der Erfindung nach Anspruch 10 ist es auch möglich, bei der Ausgabe eines pastösen Mediums diesem in Streifenform ein zweites, anders farbiges Medium, das im selben Behälter getrennt eingefüllt, vorhanden ist, während des Ausgabevorganges beizumischen.

Die Ansprüche 11 bis 20 betreffen vorteilhafte Ausgestaltungen der ausgabeseitigen Verbindung zwischen dem Faltenbalg und dem beweglichen Gehäuseteil und deren zusätzliche Wirkung als Ventilteil.

Die Merkmale des Anspruches 11 gewährleisten auch bei hohen Arbeitsdrücken eine dichte Verbindung zwischen dem Faltenbalg und dem mit dem Ausgabemundstück versehenen Gehäuseteil. Die Ausgestaltungen des ausgabeseitigen Pumpenventils nach den Ansprüchen 12, 13, 18 und 19 sind insbesondere für die dosierte Ausgabe von höherviskosen, d.h. zäher Pasten vorteilhaft, weil der erforderliche Öffnungsdruck wesentlich niedriger ist, als bei einem elastischen Ringwandabschnitt, der über den ganzen Umfang an einer zylindrischen Ringfläche anliegt, wobei das wellen- oder zick-zackförmige Profil nach Anspruch 18 den geringsten Öffnungsdruck erfordert.

Durch die Ausgestaltung der Erfindung nach Anspruch 14 ist sichergestellt, daß diese dichte Verbindung infolge der koaxialen Führung, die der Rohrstutzen dem Ringwandabschnitt des Faltenbalgs zwangsläufig zuteil werden läßt, bei der Betätigung der Dosierpumpe, d.h. bei der Druckbeaufschlagung des Faltenbalgs in keiner Weise beeinträchtigt wird, sondern noch verstärkt wird. Durch die Ausgestaltung der Erfindung nach Anspruch 15 ergeben sich nicht nur Vorteile für den konstruktiven Aufbau der Spritzgußform des mit dem Ausgabemundstück versehenen Gehäuseteils, sondern auch funktionelle Vorteile. Einerseits wird eine gute Schließfunktion des an die Ringfläche anliegenden Ringwandabschnittes des Faltenbalgs erreicht und andererseits ergibt sich bei Druckbeaufschlagung eine gleichmäßige, ringförmige Öffnung, d.h. rundum gleichmäßiges Abheben des elastischen Ringwandabschnitts von der Ringfläche, an welcher dieser zwischen den einzelnen Ausgabevorgängen dichtend anliegt.

Der zuletzt in Verbindung mit den Merkmalen des Anspruchs 15 erwähnte Vorteil wird durch die Merkmale des Anspruches 16 noch verstärkt, indem durch die Konizität der Ringfläche bzw. eines sich daran anschließenden Abschnittes das sich im Innern des Faltenbalgs befindende Medium leichter zwischen die Ringfläche und den Ringwandabschnitt des Faltenbalgs treten und diesen aufweiten kann.

An Stelle der Konizität oder zusätzlich dazu kann auch die Ausgestaltung nach Anspruch 19 vorgesehen sein, wodurch erreicht wird, daß dort, wo sich die schlitzförmigen Ausnehmungen befinden, das unter Druck stehende Medium im Bereich der Ringfläche oder unmittelbar daneben einen direkten radialen Druck auf den dehnbaren Ringwandabschnitt des Faltenbalgs ausüben und so leichter dessen radiale Dehnung bewirken kann.

In Verbindung mit den vorstehend erwähnten Ausgestaltungen der Erfindung lassen sich damit die erzielten Vorteile durch die Ausgestaltung nach Anspruch 20 in optimaler Weise kombinieren und insgesamt erhöhen.

Wenn die erfindungsgemäße Dosierpumpe nach einem der Ansprüche 22 bis 28 ausgestaltet ist, besteht die Möglichkeit, pastöse Medien mit nur einem einzigen auf der Ansaugseite des Faltenbalgs angeordneten Pumpenventil dosiert auszugeben. Es muß dabei nur sichergestellt sein, daß der sich zwischen dem Pumpenventil und der Ausgabeöffnung des Ausgabemundstücks befindende Mediumsstrang beim Saughub des Faltenbalgs nicht rückwärts in den Faltenbalg strömen kann. Bei längerem Ausgabekanal ist dies, wenn er keinen all zu großen Querschnitt aufweist und das auszugebende Medium keine all zu niedrige Viskosität besitzt, durch die innere Reibung und die Haftung an der Wandung des Ausgabekanals ohne weiteres gewährleistet. Um dasselbe auch bei relativ kurzen Ausgabekanälen bzw. kurzem Ausgabemundstück zu erzielen, ist die Ausgestaltung des Anspruches 28 vorgesehen.

Durch den gemäß Anspruch 29, 30 und 31 vorgesehenen nicht faltbaren Dehnwandabschnitt des Faltenbalgs ist es möglich im Zusammenwirken mit dem den ausgabeseitigen Ventilteil bildenden Ringwandabschnitt bei der Durchführung des Ausgabehubes vor dem Öffnen des ausgabeseitigen Ventils im Faltenbalg einen so hohen Druck zu erzeugen, daß ein flüssiges Medium, welches aus dem ausgabeseitigen Ventil in eine Sprühdüse gelangt, sofort versprüht wird. Der Nachteil bekannter Dosierpumpen, daß der Spüheffekt erst allmählich zustande kommt und zu Beginn des Ausgabevorganges Flüssigkeit ohne Sprühwirkung die Sprühdüse als laminarer Strahl oder tropfenweise verläßt, wird dabei vollständig vermieden. Die Vorteile der weiteren Ausgestaltungen gemäß den Ansprüchen 32 bis 37 sind in der nachfolgenden Beispielsbeschreibung angegeben.

Anhand der Zeichnung wird die Erfindung im folgenden näher erläuter. Es zeigt :

Fig. 1 eine erste Ausführungsform einer Dosier- und Spraypumpe im Schnitt ;

Fig. 2 einen Schnitt II-II aus Fig. 1 ;

Fig. 3 einen Schnitt III-III aus Fig. 1 ;

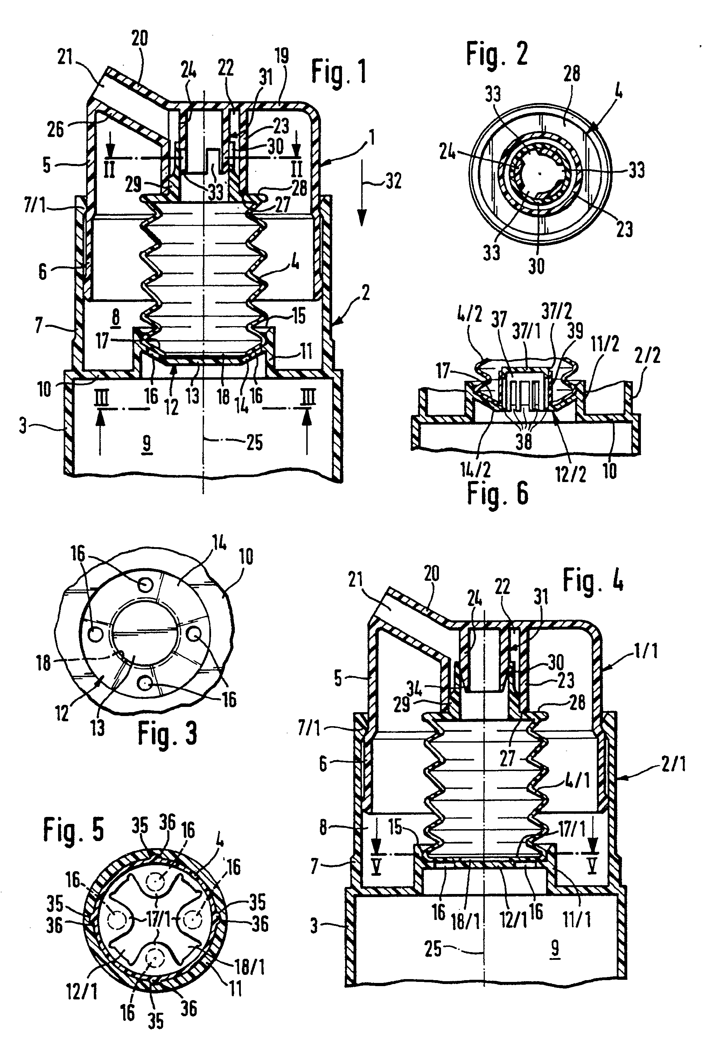

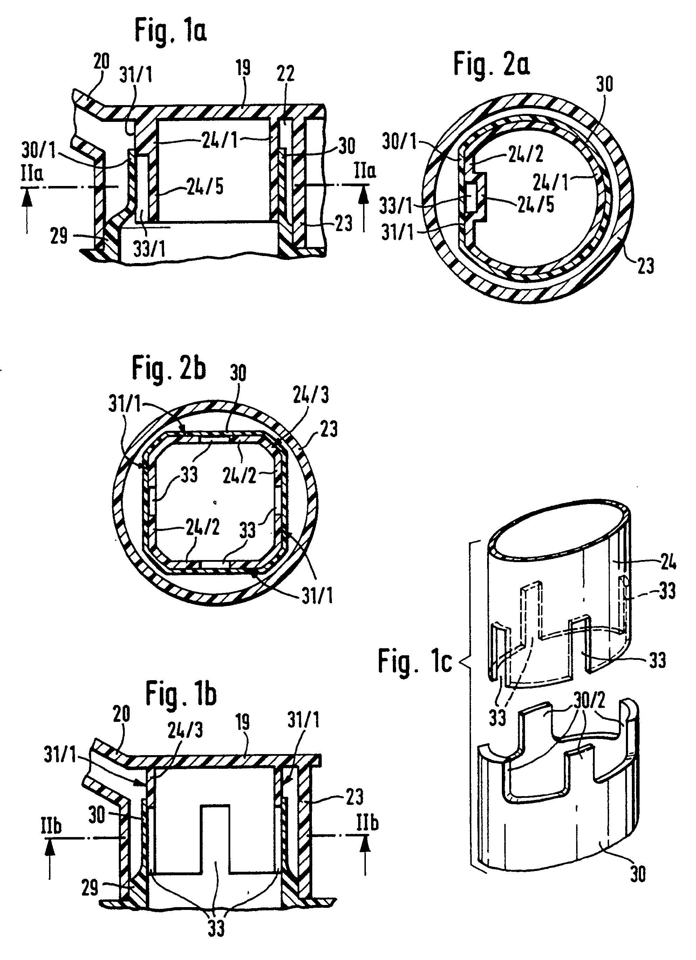

Fig. 1a eine andere Ausführungsform der ausgabeseitigen Verbindung zwischen dem Faltenbalg und dem beweglichen Gehäuseteil im Schnitt ;

Fig. 2a einen Schnitt IIa-IIa aus Fig. 1a ;

Fig. 1b eine weitere Ausführungsform der ausgabeseitigen Verbindung zwischen dem Faltenbalg und dem zweiten Gehäuseteil im Schnitt ;

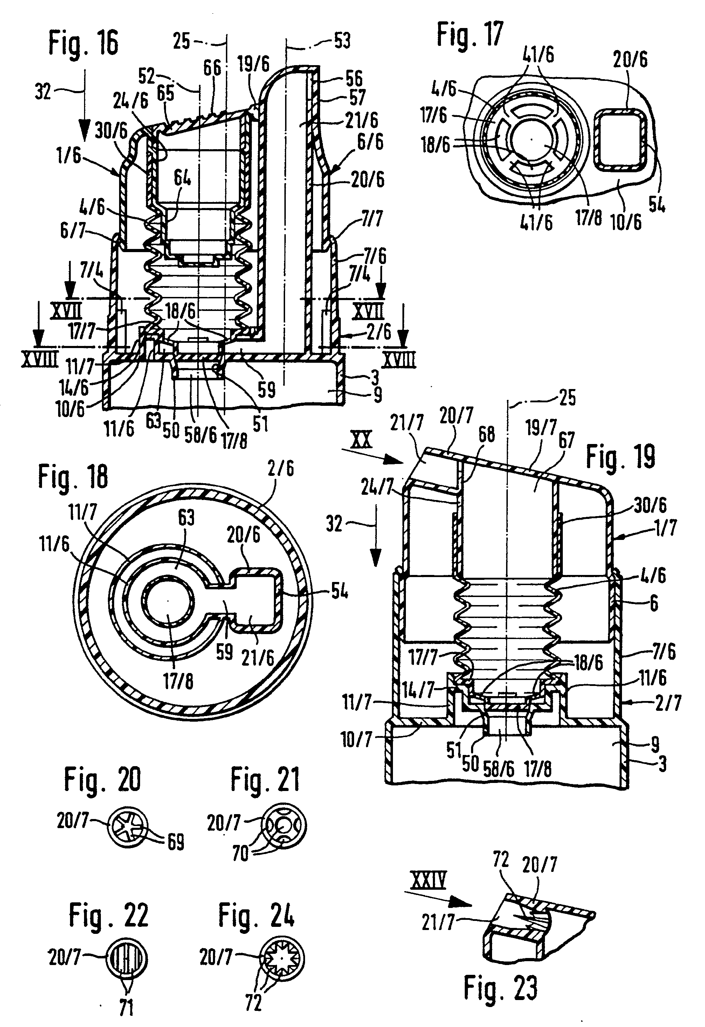

Fig. 2b einen Schnitt IIb-IIb aus Fig. 16 ;

Fig. 1c eine weitere Ausführungsform der ausgabeseitigen Verbindung zwischen dem Faltenbalg und dem beweglichen Gehäuseteil in auseinandergezogener Perspektivdarstellung ;

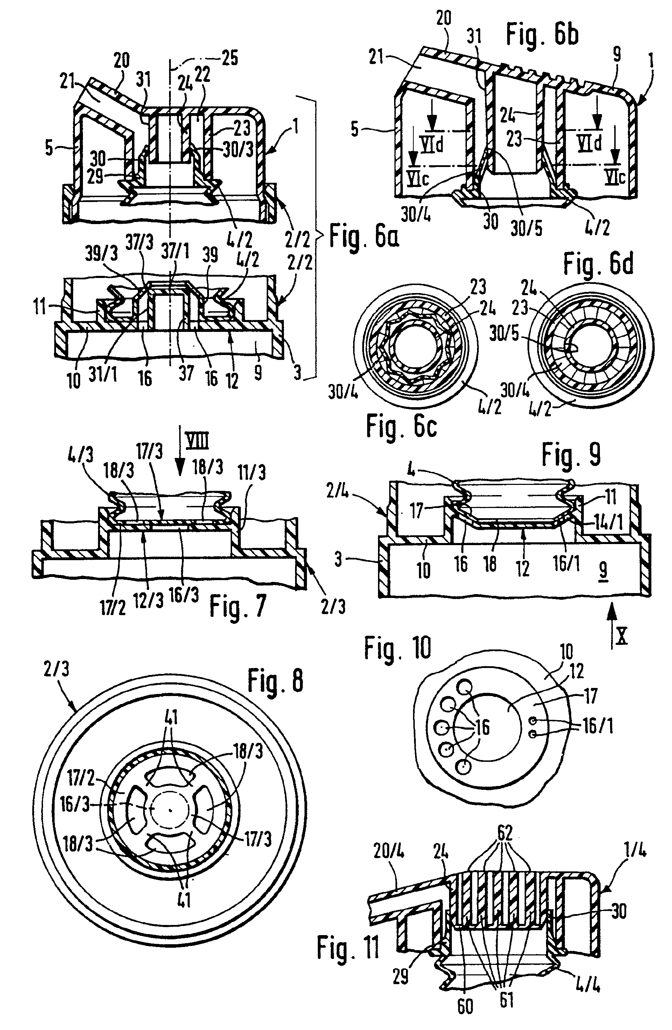

Fig. 4 eine zweite Ausführungsform einer Dosier- und Spraypumpe im Schnitt ;

Fig. 5 einen Schnitt V-V aus Fig. 4 ;

Fig. 6 eine weitere Ausführungsform des ansaugseitigen Verbindung zwischen dem Faltenbalg und dem zweiten Gehäuseteil ;

Fig. 6a weitere Ausführungsformen der beiden Verbindungen zischen dem Faltenbalg und den beiden Gehäuseteilen im Schnitt ;

Fig. 6b eine besondere Ausführungsform der ausgabeseitigen als Pumpenventil ausgebildeten Verbindung zwischen dem Faltenbalg und dem beweglichen Gehäuseteil im Schnitt ;

Fig. 6c einen Schnitt VIc-VIc aus Fig. 6b ;

Fig. 6d einen Schnitt VId-VID aus Fig. 6b ;

Fig. 7 eine weitere Ausführungsform der ansaugseitigen als Pumpenventil ausgebildeten Verbindung zwischen dem Faltenbalg und dem beweglichen Gehäuseteil im Schnitt ;

Fig. 8 eine Ansicht VIII aus Fig. 7 ;

Fig. 9 eine zusätzliche Ausführungsform der ansaugseitigen Pumpenventil ausgebildeten Verbindung zwischen dem Faltenbalg und dem beweglichen Gehäuseteil im Schnitt ;

Fig. 10 eine Ansicht X aus Fig. 9 ;

Fig. 11 eine andere Ausführungsform der ausgabeseitigen als Pumpenventil ausgebildeten Verbindung zwischen dem Faltenbalg und dem beweglichen Gehäuseteil im Schnitt ;

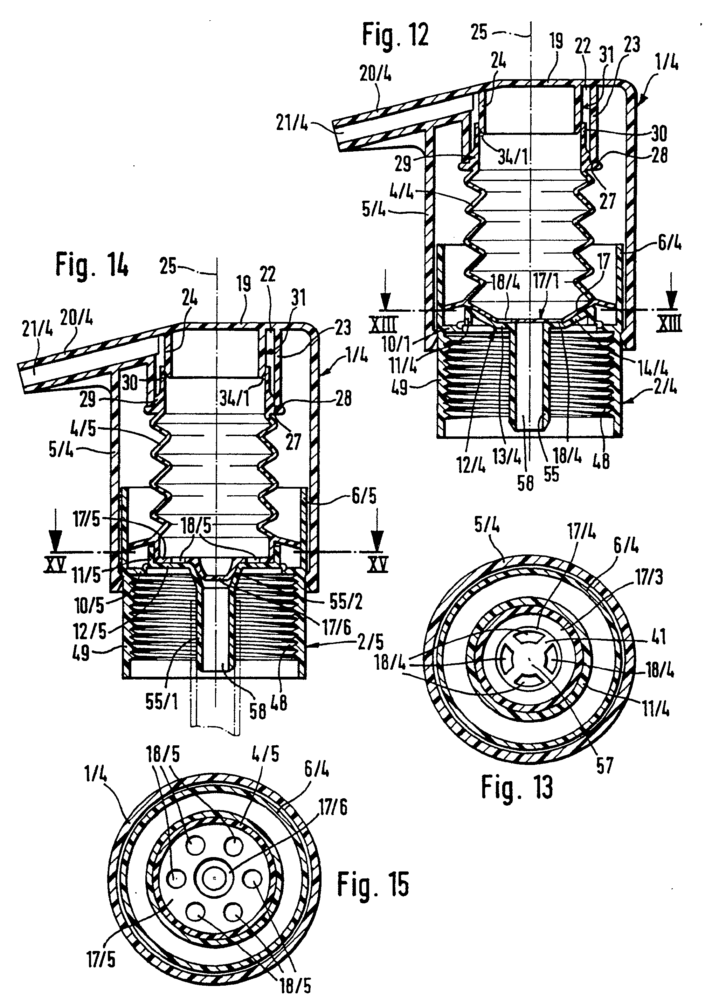

Fig. 12 eine weitere, als Flüssigkeitspumpe geeignete Dosierpumpe im Schnitt ;

Fig. 13 einen Schnitt XIII-XIII aus Fig. 12 ;

Fig. 14 eine weitere Dosierpumpe zur Ausgabe flüssiger Medien im Schnitt und

Fig. 15 einen Schnitt XV-XV aus Fig. 14.

Fig. 16 eine Dosierpumpe mit einem Faltenbalg, der nur ansaugseitig ein Pumpenventil aufweist im Schnitt ;

Fig. 17 einen Schnitt XVII-XVII aus Fig. 16 ;

Fig. 18 einen Schnitt XVIII-XVIII aus Fig. 16 ;

Fig. 19 eine Dosierpumpe mit einem am oberen Ende des Faltenbalgs angeordneten, direkt mit dem Innenraum des Faltenbalgs in Verbindung stehenden Ausgabemundstücks ;

Fig. 20 eine Querschnittsdarstellung des Ausgabemundstücks in Ansicht XX aus Fig. 19 ;

Fig. 21 und 22 weitere Ausführungsformen der im Innern des Ausgabemundstücks angeordneten Elemente zur Querschnittsverengung ;

Fig. 23 eine weitere Ausführungsform des Ausgabemundstücks im Schnitt ;

Fig. 24 eine Querschnittsdarstellung in Ansicht XXIV aus Fig. 23 ;

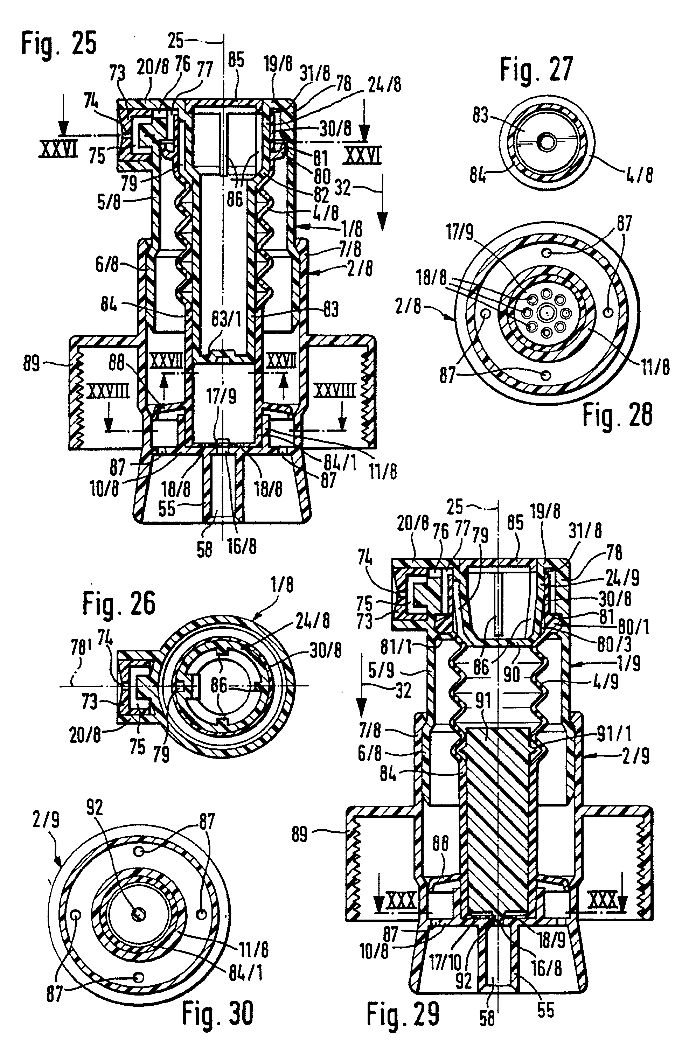

Fig. 25 eine zum Versprühen von flüssigen Medien geeignete Spraypumpe im Schnitt ;

Fig. 26 einen Schnitt XXVI-XXVI aus Fig. 25 ;

Fig. 27 einen Schnitt XXVII-XXVII aus Fig. 25 ;

Fig. 28 einen Schnitt XXVIII-XXVIII aus Fig. 25

Fig. 29 die Spraypumpe der Fig. 25 mit einer anderen ausgabeseitigen Verbindung zwischen dem Faltenbalg und dem beweglichen Gehäuseteil und mit einem anderen Verdrängungskörper im Faltenbalg ;

Fig. 30 einen Schnitt XXX-XXX aus Fig. 29.

Während die in den Fig. 1, 10 und 16 bis 21 dargestellten Ausführungsformen der erfindungsgemäßen Dosier- und Spraypumpe, so gestaltet sind, daß sie sich insbesondere für die dosierte Ausgabe pastöser Medien optimal eignen, sind in den Fig. 12 bis 15 zwei Ausführungsformen einer Dosier- und Spraypumpe dargestellt, die auch für die dosierte Ausgabe flüssiger Medien geeignet sind. In den Fig. 25 bis 30 sind zwei Ausführungsbeispiele einer Spraypumpe dargestellt, mit denen sich flüssige Medien versprühen lassen.

In der nachfolgenden Figurenbeschreibung sind für gleiche bzw. gleichartige Teile jeweils gleiche Bezugszeichen verwendet. Die in den Fig. 1 bis einschließlich 10 dargestellten Dosierpumpen bestehen jeweils aus aus insgesamt drei Einzelteilen, nähmlich einem ersten Gehäuseteil 1, einem zweiten Gehäuseteil 2, der einstückig mit einem Behälter 3 verbunden ist und aus einem Faltenbalg 4. Während die beiden Gehäuseteile 1 und 2 jeweils aus festem, formstabilem Kunststoff hergestellt sind, besteht der Faltenbalg 4 aus einem gummiartig-elastischen, weichen Kunststoff, der zugleich in der Lage ist, die für den Pumpvorgang notwendigen Rückstellkräfte zwischen den beiden Gehäuseteilen 1 und 2 aufzubringen. Der Gehäuseteil 1 besteht aus einem im wesentlichen zylindrischen Hohlkörper 5 mit einem sich etwa über die Hälfte seiner axialen Ausdehnung erstreckenden, im Durchmesser geringfügig erweiterten Führungsabschnitt 6. Dieser Führungsabschnitt 6 ist axial verschiebbar in einem Führungszylinder 7 des Gehäuseteils 2 zwischen einer Ringrippe 7/1 und einer ringförmigen Zwischenwand 10 leichtgängig geführt, wobei der Hohlraum 8 des Führungszylinders vom Hohlraum 9 des Behälters 3 durch eine Zwischenwand 10 getrennt ist. Die Zwischenwand 10 und die Ringrippe 7/1 bilden somit zwei Hubbegrenzungen für den Gehäuseteil 1. Im Zentrum dieser Zwischenwand 10 befindet sich ein zylindrischer Stützring 11 mit einer Gehäusestirnwand 12, die einen planebenen zentralen Abschnitt 13 und darum herum einen konischen Ringabschnitt 14 aufweist. Dabei ist die Gehäusestirnwand 12 in einem solchen axialen Abstand von der ausgabeseitigen Stirnfläche 15 des Stützringes 11 angeordnet, daß zumindest eine Falte des Faltenbalgs 4 vom Stützring 11 zentriert aufgenommen ist. Der Innendurchmesser des Stützringes 11 ist auf den Außendurchmesser des Faltenbalgs 4 abgestimmt und zwar so, daß die unterste Falte des Faltenbalgs mit leichtem Paßsitz vom Stützring 11 aufgenommen bzw. leicht hineingeschoben werden kann. Wie aus Fig. 1 und 3 ersichtlich ist, weist der konische Ringabschnitt 14 der Gehäusestirnwand 12 vier Auslaßöffnungen 16 in Form kreisrunder Bohrungen auf, die von einem in gleicher Weise konischen Stirnwandabschnitt 17 des Faltenbalgs 4 abgedeckt sind. Dieser Stirnwandabschnitt 17 erstreckt sich in radialer Richtung über die Breite des konischen Ringwandabschnitts 14 und liegt auf dessen Fläche dichtend auf. In Zentrum weist der Stirnwandabschnitt 17 demzufolge eine runde Durchlaßöffnung 18 auf, die etwa den gleichen Durchmesser hat wie der planebene zentrale Abschnitt 13 der Gehäusestirnwand 12.

Da der Faltenbalg 4 und sein einstückig an ihm angeformter Stirnwandabschnitt 17 aus einem gummiartig-elastischen Kunststoff bestehen, während die beiden Gehäuseteile 1 und 2 jeweils aus hartem, formfestem Kunststoff hergestellt sind, kann der Stirnwandabschnitt 17 die Funktion eines beweglichen Ventilorgans ausüben und im Zusammenwirken mit der die Auslaßöffnungen 16 aufweisenden Ringfläche des Ringabschnittes 14 das ansaugseitige Pumpenventil bilden.

Der aus dem Führungszylinder 7 herausragende obere Teil des Hohlkörpers 5 hat einen kleineren Durchmesser als der untere Teil 6 und ist mit einer Stirnwand 19 versehen. Er weist ein Ausgabemundstück 20 mit einem radial und schräg nach oben gerichteten Ausgabekanal 21 auf. Dieser Ausgabekanal 21 ist innerhalb des Hohlkörpers 5 mit einem Ringkanal 22 verbunden, der von einem einstückig angeformten Rohrstutzen 23 und einem konzentrisch dazu angeordneten, hohlzylindrischen Ansatz 24 gebildet wird. Der Rohrstutzen 23 ist ebenso wie der Ansatz 24 koaxial zur gemeinsamen Gehäuseachse 25 verlaufend einstückig an der Innenseite der Stirnwand 19 des Hohlkörpers 5 angeformt und im Ausgabebereich mit der innen liegenden Wandung 26 des Ausgabemundstückes 20 verbunden.

Während der Ansatz 24, bezogen auf die Gehäuseachse 25, eine etwa doppelt so lange axiale Ausdehnung hat wie der Ausgabekanal 21, ist der Rohrstutzen 23 mit einer noch größeren axialen Länge versehen, die diejenige des Ansatzes 24 etwa um ein Drittel übersteigt. Der Rohrstutzen 23 sitzt mit seiner unteren Stirnfläche 27 auf einer Ringschulter 28 des Faltenbalgs 4 auf. Diese Ringschulter 28 umgibt einen zylindrischen Ringbund 29, der einstückig am Faltenbalg 4 konzentrisch zu der mit der Gehäuseachse 25 zusammenfallenden Faltenbalgachse angeformt ist und dessen Wanddicke zumindest annähernd der Breite des Ringkanals 22 entspricht. Als axiale Verlängerung ist an dem Ringbund 29 ein dünnwandiger und deshalb in radialer Richtung dehnungsfähiger Ringwandabschnitt 30 einstückig angeformt, der dichtend, z.B. mit leichtem Paßsitz, und mit einer geringen Vorspannung an der zylindrischen äußeren Ringfläche 31 des Ansatzes 24 anliegt und aufgrund seiner geringen Wanddicke und Elastizität die Möglichkeit hat, sich in radialer Richtung gegen die Innenfläche des Rohrstutzens 23 vom Ansatz 24 abzuheben und so die Funktion des beweglichen Ventilorgans des ausgabeseitigen Pumpenventils auszuführen.

Da der Ringbund 29 an der Innenfläche des unteren Endes des Rohrstutzens 23 ringsum passend anliegt, stellt er zwischen dem Ringbund 23 und dem Faltenbalg 4 eine dichte Verbindung her, die auch dann gewährleistet ist, wenn bei der in Richtung der Pfeiles 32 relativ zum behälterseitigen Gehäuseteil 2 erfolgenden Hubbewegung des Gehäuseteils 1 sich ein erhöhter Pumpendruck innerhalb des Faltenbalgs 4 aufbaut.

Damit der in radialer Richtung elastische Ringwandabschnitt 30 mit geringerem Druck zum Abheben von der Ringfläche 31 veranlaßt werden kann, ist der Ansatz 24 mit drei umfangsmäßig gleich verteilt angeordneten schlitzförmigen Ausnehmungen 33 versehen, die in ihrer axialen Länge jedoch so gehalten sind, daß die wenigstens ein bis zwei Millimeter innerhalb des Ringwandabschnitts 30 enden, so daß dieser über die axiale Länge von den zwei bis drei Millimetern ringsum ununterbrochen der Ringfläche 31 anliegt.

Beim Ausführungsbeispiel der Fig. 4 und 5 sind die beiden Gehäuseteile 1/1 und 2/1 im wesentlichen gleich ausgebildet wie beim vorstehend beschriebenen Ausführungsbeispiel der Fig. 1, 2 und 3. Lediglich der Ansatz 24 mit seiner zylindrischen Ringfläche 31 ist über den größten Teil seines in den radial-elastischen Ringwandabschnitt 30 des Faltenbalgs 4/1 hineinragenden Endabschnitts statt mit Ausnehmungen mit einem sich in Eintauchrichtung verjüngenden Konus 34 vesehen. Dieser Konus 34 erleichtert das Eintreten des auszugebenden und sich im Innern des Faltenbalgs 4/1 befindenden pastösen Mediums zwischen die Ringfläche 31 und den Ringwandabschnitt 30, so daß ein geringerer Axialdruck zum radialen Aufweiten des Ringwandabschnittes 30 genügt, als wenn der Ansatz 24 über seine gesamte Länge zylindrisch ausgebildet und auch nicht mit Ausnehmungen 33 versehen wäre.

Der Ansatz 24 hat bei den Ausführungsformen der Fig. 1 bis 4 jeweils eine runde, im wesentlichen zylindrische Form, und er ist mit schlitzförmigen Ausnehmungen und/oder einem Konus versehen. Diese Ausführungsformen des Ansatzes 24 eigenen sich vorwiegend für die Ausgabe flüssiger oder sehr niederviskoser Medien. Bei Pasten mit höherer Zähigkeit d.h. höherer Viskosität muß aber erfahrungsgemäß ein zu hoher Druck ausgeübt werden, damit sich der elastische Ringwandabschnitt 30 von der Ringfläche 31 des Ansatzes 24 abhebt, wenn diese Ringfläche rund bzw. zylindrisch ist.

Auch der Gehäuseteil 2/1 weist im Bereich seines Stützringes 11 gegenüber der Ausführungsform der Fig. 1 und 3 eine Änderung auf. Statt einer teilweise konischen Gehäusestirnwand 12 ist eine planebene Gehäusestirnwand 12/1 vorgesehen, die auf einem gemeinsamen Radius liegend vier jeweils um 90° zueinander versetzte, kreisrunde Auslaßöffnungen 16 aufweist. Diese Auslaßöffnungen 16 werden jeweils von zungenartigen Stirnwandabschnitten 17/1 des Faltenbalgs 4/1 abgedeckt. Diese zungenartigen Stirnwandabschnitte 17/1 wirken als bewegliche Ventilorgane des ansaugseitigen Pumpenventils, indem sie bei der Ausführung des Druckhubes des Gehäuseteiles 1/1 in Pfeilrichtung 32 die Durchlaßöffnungen 16 dicht verschließen, während sie bei der darauffolgenden, von den elastischen Rückstellkräften des Faltenbalgs 4/1 bewirkten Rückwärtsbewegung, bei welcher innerhalb des Faltenbalgs 4 ein Unterdruck entsteht, die Durchlaßöffnungen 16 zum Ansaugen neuen Mediums aus dem Behälter 3 klappenartig freigeben. Zwischen den zungenartigen Stirnwandabschnitten 17/1 ist auch hier eine Durchlaßöffnung 18/1, allerdings mit einer anderen Randform vorhanden.

Um sicher zu stellen, daß beim Einsetzen des ansaugseitigen Endabschnitts des Faltenbalgs 4/1 in den Stützring 11/1 die zungenförmigen Stirnwandabschnitte 17/1 auch in die Positionen gelangen, in welchen sie die Durchlaßöffnungen 16 schließend abdecken, ist der Stützring 11/1 mit vier kerbenartigen Ausnehmungen 35 und der im Stützring 11/1 sitzende Rand des Faltenbalgs 4/1 mit radial vorstehenden Nocken 36 versehen, welche in die kerbenartigen Ausnehmungen 35 hineinpassen.

Im übrigen sind Aufbau und Funktionsweise gleich wie beim Ausführungsbeispiel der Fig. 1 bis 3.

Um jedoch das Abheben des Ringwandabschnitts 30 von der äußeren Ringfläche 31 des Ansatzes 24 wenigstens abschnittweise noch weiter zu erleichtern und dadurch auch höher viskose, d.h. zähere Pasten der erfindungsgemäßen Dosierpumpe mit geringem Arbeitsdruck dosiert ausgeben zu können, sind die in den Fig. 1a, 2a, 1b, 2b und 1c dargestellten Ausführungsformen des ausgabeseitigen Pumpenventils vorgesehen.

Bei der Ausführungsform der Fig. 1a und 2a ist der größtenteils zylindrische Ansatz 24/1 auf der gegen das Ausgabemundstück gerichteten Seite mit einem abgeflachten, ebenen Wandabschnitt 24/2 versehen, der einen im Querschnitt rechteckigen Förderkanal 33/1 aufweist. Dieser Förderkanal 33/1 wird von einem U-förmigen Wandabschnitt 24/5 gebildet, und er ist durch einen an der ebenen Außenfläche 31/1 anliegenden, elastischen Ringwandabschnitt 30/1 des Faltenbalgs 4 verschlossen. Bei Auftreten eines Förderdruckes wird jedoch der Ringwandabschnitt 30/1 von der ebenen Außenfläche 31/1 abgehoben, so daß Paste aus dem Förderkanal 33/1 in das Ausgabemundstück 20 dringen kann. Durch die ebene Außenfläche 31/1, an welcher der den Förderkanal 33/1 verschließende, elastische Ringwandabschnitt 30/1 anliegt wird der Öffnungsdruck, der das Öffnen des Förderkanals 33/1 bewirkt, wesentlich verringert gegenüber dem Öffnungsdruck, der bei dem völlig zylindrischen Ansatz 24 der Fig. 1 und Fig. 4 erforderlich ist. Dies beruht im wesentlichen darauf, daß bei einer ebenen Anlegefläche der radial abzuhebende, elastische Ringwandabschnitt einer wesentlich geringeren Haftungsreibung unterliegt und daß er auch einer wesentlich geringeren Streckung bzw. Dehnung ausgesetzt ist als bei einer zylindrischen Anlegefläche.

Beim Ausführungsbeispiel der Fig. 1b und 2b ist der Ansatz 24/3 im wesentlichen quadratisch ausgebildet und mit vier ebenen Wandabschnitten 24/2 versehen, die jeweils in ihrer Mitte schlitzförmige Ausnehmungen 33 aufweisen. Anstatt der schlitzförmigen Ausnehmungen 33 können die Wandabschnitte 24/2 wie beim Ausführungsbeispiel der Fig. 1a und 2a Förderkanäle 33/1 aufweisen.

Die Funktionsweise ist im Prinzip gleich wie bei Fig. 1a und 2a beschrieben. Daß dabei auch der Ringbund 29 eine quadratische Querschnittsform aufweist ist nicht unbedingt erforderlich, aber montagetechnisch von Vorteil.

Wie das Ausführungsbeispiel der Fig. 1c zeigt, ist aber auch bei einer zylindrischen Form des mit schlitzförmigen Ausnehmungen 33 versehenen Ansatzes 24 eine Reduzierung des Arbeitsdruckes zum Öffnen des ausgabeseitigen Ventils möglich. Das Besondere dabei ist, daß die Ausnehmungen 33 nicht wie bei den vorstehend beschriebenen Ausführungsformen von einem geschlossenen Ringwandabschnitt 30 umschlossen sind sondern durch zungenartige Axialvorsprünge 30/2, die etwas breiter und länger sind als die Ausnehmungen 33. Diese zungenförmigen Vorsprünge 30/2 sind einstückig am Ringwandabschnitt 30 des Faltenbalgs 4 einstückig angeformt. Sie bestehen also aus elastischem Kunststoff und sind deshalb mit relativ geringem Radialdruck nach außen auslenkbar, so daß zu ihrer diesbezüglichen Betätigung nur ein geringer Arbeitsdruck erforderlich ist, wenn ein hochviskoses d.h. zähfließendes, Medium dosiert ausgegeben werden soll.

Bei der Ausführungsform der Fig. 6 ist teilweise der einen Stützring 11/2 umfassende Abschnitt eines Gehäuseteils 2/2 und der ansaugseitige Endabschnitt eines Faltenbalgs 4/2 dargestellt, der sich in diesem Bereich von den beiden vorstehend geschilderten Ausführungsformen unterscheidet. Der Stützring 11/2 weist ähnlich wie der Stützring 11 in Fig. 1 einen konischen Stirnwandabschnitt 14/2 auf, der jedoch keine Durchgangsöffnungen besitzt, sondern in seinem Zentrum mit einer zylindrischen Ringwand 37 versehen ist, welche stirnseitig in den Faltenbalg 4/2 hineinragt und eine geschlossene Stirnwand 37/1 aufweist. Die Ringwand 37 ist mit einer Anzahl in Umfangsrichtung gleichmäßig verteilt angeordneter, schlitzförmiger Durchlaßöffnungen 38 versehen, die in einem Abstand von wenigstens zwei bis drei Millimetern von der Stirnwand 37/1 enden.

Der Faltenbalg 4/2 weist einen dem Ringwandabschnitt 30 entsprechenden dünnwandigen, zylindrischen Schlauchansatz 39 auf, der einstückig an seinem konischen Stirnwandabschnitt 17 angeformt ist und der die äußere Ringfläche 37/2 der Ringwand 37 elastisch anliegend umschließt, so daß die schlitzförmigen Durchlaßöffnungen 38 vollständig geschlossen sind. Die axiale Länge des Schlauchansatzes 39 ist so gewählt, daß sie die schlitzförmigen Durchlaßöffnungen 38 um einige Millimeter überragt und in diesem Bereich ringsum ununterbrochen an der Ringfläche 37/2 der Ringwand 37 dichtend anliegt.

Die Ringwand 37 des Gehäuseteils 2/2 bzw. des Stützringes 11/2 und der Schlauchansatz 39 des Faltenbalgs 4/2 bilden somit ein Ansaugventil, das den prinzipiell gleichen Aufbau und auch die prinzipiell gleiche Funktionsweise aufweist, wie die ausgabeseitigen Pumpenventile der in den Fig. 1 bis 3 und 4 dargestellten Dosierpumpen.

Es ist zu erwähnen, daß sich in den jeweils einstückig an den Gehäuseteilen 2, 2/1, 2/2, 2/3, 2/4, 2/6 und 2/7 in bekannter Weise sog. Nachlaufkolben befinden, die jeweils beim Ablauf eines Ansaughubes einen Nachlaufbewegung entgegen der Richtung des Pfeiles 32 ausführen.

In Fig. 6a sind ein Ausführungsbeispiele der beiden Pumpenventile dargestellt, bei denen der ausgangsseitige Ansatz 24 und auch die ansaugseitige Ringwand 37 jeweils eine exakt zylindrische Form aufweisen, bei der aber der elastische Ringwandabschnitt 30 und der Schlauchansatz 39 des Faltenbalgs 4/2 jeweils mit einem sich in Ausgabe- bzw. Ansaugrichtung verjüngenden konischen Endabschnitt 30/3 bzw. 39/3 versehen sind. Während der konische Endabschnitt 30/3 mit seiner inneren Ringkante linienförmig oder in Form eines schmalen, ringförmigen Flächenstreifens an der Ringfläche 31 des Ansatzes 24 anliegt, ist der konische Endabschnitt 39/3 des Schlauchansatzes 39 so angeordnet, daß er mit seiner Innenseite auf der oberen Ringkante 37/3 der Ringwand 37 aufsitzt. Dabei ist aus Fig. 6a auch erkennbar, daß der Innendurchmesser des Ringwandabschnittes 30 größer ist als der Außendurchmesser des Ansatzes 24 und daß der Innendurchmesser des Schlauchansatzes 39 größer ist als der Außendurchmesser der Ringwand 37. Damit das auszugebende Medium aus dem Hohlraum 9 des Behälters 3 in den Faltenbalg 4/2 angesaugt werden kann, sind in der Gehäusestirnwand 12 um die Ringwand 37 herum innerhalb des Schlauchansatzes 39 Auslaßöffnungen 16 angeordnet.

Es ist auch ohne weiteres möglich, den konischen Endabschnitt 39/3 so anzuordnen, daß er mit seiner inneren Ringkante am Umfang der Ringwand 37 dichtend anliegt. Der Öffnungsdruck ist dann auch ansaugseitig größer als bei der in Fig. 6a dargestellten Ausführungsform. Ansaugseitig ist ein geringer Öffnungsdruck grundsätzlich vorteilhafter, weil er von den Rückstellkräften des Faltenbalg aufgebracht werden muß, durch welche auch der bewegliche Gehäuseteil 1 nach jedem in Richtung des Pfeiles 32 erfolgenden Arbeitshub wieder in die Ausgangslage zurückgeschoben werden muß.

In den Fig. 6b, 6c und 6d ist eine weitere Variante der Ausgestaltung des Ringwandabschnitts 30 mit einem sich in Ausgaberichtung konisch verjüngenden Endabschnitt 30/4 dargestellt. Der sich an den zylindrischen Rinwandabschnitt 30 einstückig anschließende konische Endabschnitt 30/4 ist in Umfangsrichtung wellenförmig profiliert und mit einer exakt zylindrischen Öffnung versehen, deren Innenfläche 30/5 spaltfrei dichtend an der zylindrischen Ringfläche 31 des Ansatzes 24 anliegt. Die Wellenform ist dabei am besten aus Fig. 6c erkennbar. Durch dieses wellenförmige Profil des konischen Endabschnittes 30/4 wird die zum Abheben der Innenfläche 30/5 von der Ringfläche 31 erforderliche Kraft zusätzlich wesentlich verringert, weil dabei keine Materialstreckung, sondern lediglich eine Materialbiegung stattfindet, die mit geringerer Kraft zu erzielen ist. Für zähfließende Medien, also z.B. hochviskose Pasten, ist deshalb diese Ausführungsform besonders gut geeignet. Ein zick-zackförmiges Profil dieses konischen Endabschnittes 30/4 kann zu ähnlich guten Ergebnissen führen.

Bei der Ausführungsform der Fig. 7 und 8 ist eine planebene Gehäusestirnwand 12/3 innerhalb eines Stützringes 11/3 mit einer zentralen Auslaßöffnung 16/3 versehen. Um diese Auslaßöffnung 16/3 während der Pumphübe wechselweise zu verschließen und freizugeben, ist der Faltenbalg 4/3 mit einem zentralen, kreisförmigen Stirnwandabschnitt 17/3 versehen, der durch Radialstege 41 unter Bildung sektorartiger Durchlaßöffnungen 18/3 mit dem ringförmigen Randteil 17/2 elastisch verbunden ist und der elastisch dichtend auf dem Rand der Auslaßöffnung 16/3 aufliegt. Auch hier bilden die mit der Auslaßöffnung 16/3 versehene Gehäusestirnwand 12/3 des Gehäuseteiles 2/3 und der zentrale Stirnwandabschnitt 17/3 des Faltenbalges 4/3 das ansaugseitige Pumpenventil, wobei der Stirnwandabschnitt 17/3 das bewegliche Ventilorgan darstellt.

Bei der Ausführungsform der Fig. 9 und 10 unterscheidet sich die Gehäusestirnwand 12 des Gehäuseteils 2/3 von derjenigen der Fig. 1 nur dadurch, daß auf der einen Ringhälfte des konischen Stirnwandabschnitts 17 fünf Durchlaßöffnungen 16 mit einem größeren Durchmesser und in der anderen Ringhälfte des Stirnwandabschnittes 17 nur zwei Durchlaßöffnungen 16/1 mit einem relativ kleinen Durchmesser angeordnet sind. Sowohl die Durchlaßöffnungen 16 als auch die Durchlaßöffnungen 16/1 sind hierbei in gleicher Weise wie bei Fig. 1 von dem die Durchlaßöffnung 18 umgebenden ringförmigen Stirnwandabschnitt 17 des Faltenbalgs 4 abgedeckt. Durch diese Anordnung besteht die Möglichkeit, den Behälter 3 des Gehäuseteils 2/4 in dem Endbereich, wo die mit dem kleineren Durchlaßquerschnitt bzw. Durchmesser versehenen Durchlaßöffnungen 16/1 angeordnet sind, ein pastöses Medium einzugeben, das sich farblich von dem in überwiegender Menge vorhandenen Hauptmedium unterscheidet und so in dem den Ausgabekanal 21 verlassenden Pastenstrang Farbstreifen des andersfarbigen Mediums zu erzeugen.

In Fig. 11 ist zudem noch gezeigt, daß der Ansatz 24 des beweglichen Gehäuseteils 1/4 an seinem in den Ringwandabschnitt 30 des Faltenbalgs 4/4 hineinragenden Ende mit einer Stirnwand 60 versehen sein kann, so daß er eine insgesamt topf- oder zapfenartige Form aufweist. Um aus bedienungstechnischen Gründen keinen leeren Hohlraum im Ansatz 24 entstehen zu lassen, sind in dessen Innenraum mehrere dünnwandige Querwände 61 angeformt, deren stirnseitige Oberflächen 62 bei der Betätigung des Gehäuseteils 1/4 eine griffige Angriffsfläche bieten. Ähnlich könnten auch die Ansätze 24 bei den Dosierpumpen der Fig. 1 und 4 bzw. 6a und 6b, sowie bei den nachfolgend beschriebenen Beispielen der Fig. 12 bis 18 und 25 bis 28 ausgebildet sein.

Bei dem in den Fig. 12 und 13 bzw. 14 und 15 dargestellten Dosierpumpen handelt es sich um Ausführungsformen, die auch oder vorwiegend zur Ausgabe von flüssigen Medien vorgesehen und zum Aufschrauben auf den Gewindehals eines tuben-, flaschen- oder dosenartigen Behälters eingerichtet sind.

Auch sie bestehen im wesentlichen aus zwei zylindrischen Gehäuseteilen 1/4 und 2/4 bzw. 2/5 sowie einem Faltenbalg 4/4 bzw. 4/5. Während die beiden Gehäuseteile 1/4 und 2/4 bzw. 2/5 jeweils aus hartem, formstabilem Kunststoff einstückig im Spritzgußverfahren hergestellt sind, bestehen die Faltenbalge 4/4 und 4/5 jeweils aus einem weichen, formelastischen Kunststoff, der zugleich die für den Pumpvorgang notwendigen Rückstellkräfte aufzubringen in der Lage ist.

Der Gehäuseteil 1/4 setzt sich zusammen aus einem zylindrischen Hohlkörper 5/4, einer Stirnwand 19, einem radial und schräg zur Behälterachse 25 nach außen gerichteten Ausgabemundstück 20/4, einem konzentrisch zur Gehäuseachse 25 angeordneten Rohrstutzen 23 und einem darin konzentrisch angeordneten zylindrischen Ansatz 24. Der Rohrstutzen 23 und der Ansatz 24 bilden zwischen sich den auch bei den Ausführungsformen der Fig. 1 bis 5 vorhandenen Ringkanal 22, der mit einem Ausgabekanal 21/4 des Ausgabemundstückes 20/4 in Verbindung steht. Der Ansatz 24 und der Rohrstutzen 23 unterscheiden sich von dem Ansatz 24 bzw. dem Rohrstutzen 23 der Fig. 1 nur dadurch, daß sie beide größere Durchmesser aufweisen. Entsprechend sind auch der Ringbund 29 des Faltenbalgs 4/4 und der dünnere radial dehnbare Ringwandabschnitt 30 jeweils mit einem größeren Außen- bzw. Innendurchmesser versehen, derart, daß der Ringbund 29 dichtend am unteren Abschnitt der Innenfläche des Rohrstutzens 23 und der Ringwandabschnitt 30 an der äußeren Ringfläche 31 des Ansatzes 24 anliegt. Der Ansatz 24 ist an seinem in den Ringwandabschnitt 30 hineinragenden Endabschnitt mit einem kleinen Konus 34/1 versehen, welcher die gleiche Aufgabe hat wie der Konus 34 des Ansatzes 24 bei der Dosierpumpe der Fig. 4. Auch bei den Ausführungsformen der Fig. 12 und 14 ist die Wanddicke des Ringbundes 29 gleich groß wie die radiale Weite des Ringkanals 22, und es ist die Wanddickenverringerung des elastischen Ringwandabschnittes 30 durch eine entsprechende Verringerung des Außendurchmessers erzeugt.

Aus der Zeichnung ist ersichtlich, daß der Innendurchmesser des Ringbundes 29 ein Maß aufweist, das zwischen dem Innendurchmesser und dem Außendurchmesser des faltbaren Faltabschnitts des Faltenbalgs 4/4 liegt. Dadurch ist dem Umstand Rechnung getragen, daß bei diesen beiden Ausführungsformen der Fig. 12 und 13 bzw. 14 und 15 der ansaugseitige Endabschnitt des Faltenbalgs 4/4 jeweils mit einer Stirnwand versehen ist, die keine zentrale Öffnung aufweist wie der Faltenbalg 4 und deshalb in der entgegengesetzten Axialrichtung entformt werden muß. Dies gilt auch für die in Fig. 6 und 7 dargestellten Faltenbälge 4/2 und 4/3, von denen jedoch jeweils nur die ansaugseitigen Endabschnitte dargestellt sind. Auch bei den Dosierpumpen der Fig. 12, 13 bzw. 14, 15 stellt der elastische Ringwandabschnitt 30 des Ringbundes 29 im Zusammenwirken mit der äußeren, zylindrischen Ringfläche 31 des Ansatzes 24 das ausgabeseitige, bei auftretendem Druck innerhalb des Faltenbalgs 4/4 selbst öffnende und danach wieder schließende Pumpenventil dar.

Der ansaugseitige Endabschnitt des Faltenbalgs 4/4 ragt in einen im Durchmesser wesentlich größeren zylindrischen Führungsteil 6/4 des Gehäuseteils 2/4 bzw. 2/5, der teleskopartig verschiebbar im zylindrischen Hohlkörper 5/4 geführt ist und an welchem einstückig eine im Außendurchmesser geringfügig verkleinerte mit einem Innengewinde 48 versehene Gewindemuffe 49 angeformt ist. An einer sich zwischen dem Führungsteil 6/4 und der Gewindemuffe 49 befindenden Zwischenwand 10/4 ist einstückig ein konzentrischer Stützring 11/4 angeformt, der einen kleineren Durchmesser hat als der Führungsteil 6/4 und der axial gegen den Faltenbalg 4/4 vorspringt. Dieser Stützring 11/4 ist in Fig. 12 mit einer Gehäusestirnwand 12/4 versehen, die einen konischen Ringabschnitt 14/4 und einen planebenen, inneren Abschnitt 13/4 mit einem nach unten gerichteten Schlauchanschlußstutzen 55 aufweist.

Der Faltenbalg 4/4 besitzt einen einstückig angeformten, dem Profil der Gehäusestirnwand 12/4 angepaßten und somit dichtend auf deren Oberseite aufliegenden, kreisförmigen Stirnwandabschnitt 17/4, der wie Fig. 13 am besten zeigt, die Bohrung 58 des Schlauchanschlußstutzens 55 verschließt und von vier sektorartigen Durchlaßöffnungen 18/4 umgeben ist, durch welche beim Ansaugvorgang das durch die Bohrung 58 angesaugte, vorzugsweise flüssige Medium in den Innenraum des Faltenbalgs 4/4 gelangen kann. Auch hier ist, wie beim Ausführungsbeispiel der Fig. 7 und 8, der kreisförmige Stirnwandabschnitt 17/4 durch Radialstege 41 mit einem konischen Stirnwandabschnitt 17 verbunden.

Bei der Ausführungsform der Fig. 14 und 15 ist der Faltenbalg 4/4 an seinem ansaugseitigen Endabschnitt mit einem planebenen, ringartigen Stirnwandabschnitt 17/5 mit runden Durchlaßöffnungen 18/5 versehen. Die Zwischenwand 10/1 weist einen Stützring 11/5 mit einer ebenfalls planebenen Gehäusestirnwand 12/5 mit einem Schlauchanschlußstutzen 55/1 auf, der an seinem oberen Ende mit einer konischen Erweiterung 55/2 versehen ist, in welche dicht anliegend ein nippelartig vorspringender, hohler Stirnwandabschnitt 17/6 des Faltenbalgs 4/5 hineinragt. Um diesen Stirnwandabschnitt 17/6 herum sind, wie am besten aus Fig. 15 erkennbar ist, die kreisrunden Durchlaßöffnungen 18/5 angeordnet, welche die gleiche Funktion haben, wie die Durchlaßöffnungen 18/4 beim Ausführungsbeispiel der Fig. 12 und 13.

Um eine dosierte Abgabe des z.B. im Behälter 3 oder in einer Flasche befindlichen Mediums zu bewirken, wird der jeweils obere Gehäuseteil 1, 1/1 bzw. 1/4 axial relativ zum jeweils unteren Gehäuseteil 2, 2/1, 2/3 bzw. 2/5 in Richtung des Pfeiles 32 bewegt und dabei der Faltenbalg 4, 4/1, 4/2, 4/3, 4/4 oder 4/5 zusammengedrückt. Durch die damit verbundene Volumenverkleinerung und Druckerhöhung im Faltenbalg 4 bis 4/5 wird der größte Teil des sich im Faltenbalg 4, bis 4/5 befindenden Mediums durch den sich dehnenden bzw. öffnenden Ringwandabschnitt 30, 30/1 bzw. konischen Endabschnitt 30/3, 30/4 in den Ringakanal 22 und durch den Ausgabekanal 21 bzw. 21/4 nach außen befördert. Wird daraufhin der obere Gehäuseteil 1, 1/1 bzw. 1/4 wieder losgelassen und vom Faltenbalg 4, bis 4/5 in seine Ausgangslage zurückbewegt, legt sich durch den im Faltenbalg entstehenden Unterdruck der Ringwandabschnitt 30, 30/1 bzw. sein konischer Endabschnitt 30/3 bzw. 30/4 wieder schließend an die Ringfläche 31 bzw. 31/1 an. Gleichzeitig wird bzw. werden aber ansaugseitig die Durchlaßöffnungen 16, 16/1, 16/3, 38 bzw. 58 durch die elastischen Stirnwandabschnitte 17, 17/1, 17/3, 17/4, 17/6 bzw. den Schlauchansatz 39 geöffnet, so daß weiteres Medium in den Faltenbalg 4 bis 4/5 einströmt. Beinachfolgendem Druckhub werden die Stirnwandabschnitte 17, 17/1, 17/3, 17/4, 17/6 bzw. der Schlauchansatz 39 wieder schließend an die darunterliegenden Ringflächen angepreßt.

Bei der in den Fig. 16, 17 und 18 dargestellten Dosierpumpe ist an einer Zwischenwand 10/6 eines mit einem einstückig angeformten Behälter 3 versehenen Gehäuseteils 1/6 exzentrisch zur Gehäuseachse 25 ein nach unten in den Hohlraum 9 des Behälters 3 ragender Ansaugstutzen 50 mit einem Innenkonus 51 angeformt, der als ringförmige Ventilsitzfläche dient. Konzentrisch zur Achse 52 des Ansaugstutzens 50 ist auf dessen Gegenseite eine Ringwand 11/6 mit einer radialen Ringschulter 14/6 angeformt, die auf der Innenseite eines Sützringes 11/7 verläuft. Diametral zur Gehäuseachse 25 ist auf der dem Ansaugstutzen 50 gegenüberliegenden Seite auf der Außenseite der Zwischenwand 10/6 ein Ausgabemundstück 20/6 in Form eines Düsenstockes angeformt, dessen Achse 53 parallel zur Gehäuseachse 25 und somit auch parallel zur Achse 52 des Ansaugstutzens 50 verläuft. Wie aus Fig. 17 ersichtlich ist, hat der Auslaßkanal 21/6 des Ausgabemundstücks 20/6 einen im wesentlichen rechteckförmigen Querschnitt. Am oberen Ende besitzt dieses Ausgabemundstück 20/6 in seiner ebenflächigen Außenwand 54 eine radial nach außen gerichtete Ausgabeöffnung 56, welche durch eine axial bewegliche Schließwand 57 verschlossen bzw. verschließbar ist.

Der Ausgabekanal 21/6 steht durch einen radialen Verbindungskanal 59 mit dem Innenraum 63 der Ringwand 11/6 und über diesen durch die Bohrung 58/6 des Ansaugstutzens 50 mit dem Innenraum 9 des Behälters 3 in Verbindung.

Auf der Ringschulter 14/6 sitzt dichtend ein ringförmiger Stirnwandabschnitt 17/7 eines Faltenbalgs 4/6 auf. Dieser Stirnwandabschnitt 17/7 steht durch Radialstege 41/6 (Fig. 17) mit einem topfförmigen Stirnwandabschnitt 17/8 in elastischer Verbindung, der das axial bewegliche Ventilteil des ansaugseitigen Pumpenventils bildet und in der in Fig. 16 dargestellten Schließposition dichtend am Innenkonus 51 des Ansaugstutzens 50 anliegt. Der topfförmige Stirnwandabschnitt 17/8 ist von ringsegmentartigen Durchlaßöffnungen 18/6 umgeben, durch welche der Innenraum 63 der Ringwand 11/6 mit dem Innenraum des Faltenbalgs 4/6 in Verbindung steht.

An seinem oberen Ende besitzt der Faltenbalg 4/6 einen hülsenförmigen, zylindrischen Ringwandabschnitt 30/6, der mit einer solchen radialen Vorspannung einen hohlzylindrischen Ansatz 24/6 eines als Drucktaste ausgebildeten Gehäuseteils 1/6 umschließt, daß diese Vorspannung dem im Innern des Faltenbalgs 4/6 entstehenden maximalen Pumpendruck standhält, also radial nicht abhebt. Beim Befüllen des Behälters 3 wird aber auch der Faltenbalg 4/6 und der Ausgabekanal 21/6 mit Medium gefüllt. Dies geschieht mit einem so hohen Fülldruck, daß sie sich im Faltenbalg 4/6 befindene Luft durch den sich dabei vom Ansatz 24/6 leicht abhebenden Ringwandabschnitt 30/6 nach außen gepreßt wird. Um den Faltenbalg 4/6 während eines in Richtung des Pfeiles 32 erfolgenden Pumphubes zumindest annähernd vollständig leeren zu können, ist der hohlzylindrische Ansatz 24/6 mit einem entsprechend dem Querschnittprofil des unteren Faltenbalgabschnittes mehrfach abgestuften, topfförmigen Verdrängungskörper 64 versehen, dessen größter Außendurchmesser annähernd dem Innendurchmesser des faltbaren Abschnitts des Faltenbalgs 4/6 entspricht. Die sich spritzgußtechnisch ergebende zylindrische Öffnung am oberen Ende des Ansatzes 24/6 ist durch einen eingepaßten Deckelteil 65 mit Griffrippen 66 verschlossen.

Wie aus Fig. 16 erkennbar ist, besteht der Gehäuseteil 1/6 aus einem zylindrischen Führungsabschnitt 6/6, der teleskopartig axial zwischen zwei Hubbegrenzungen verschiebbar in einem Führungszylinder 7/6 des Gehäuseteils 2/6 geführt ist. An dem zylindrischen Führungsabschnitt 6/6 ist die Schließwand 57 für die Ausgabeöffnung 56 des Ausgabemundstückes 20/6 einstückig angeformt. An seinem unteren Rand ist der Führungsabschnitt 6/6 mit einer außen umlaufenden Ringrippe 6/7 versehen, die mit dem ringsum eingebördelten Rand 7/7 des Führungszylinders 7/6 die obere Hubbegrenzung bildet. Die untere Hubbegrenzung bilden Anschlagrippen 7/4 im Zusammenwirken mit dem unteren Rand des Führungsabschnitts 6/6 bzw. des Gehäuseteils 1/6. Die ebenfalls einstückig am Führungsabschnitt 6/6 angeformte Stirnwand 19/6 ist mit einer das als Düsenstock ausgebildete Ausgabemundstück 20/6 dicht umschließenden Öffnung versehen, durch welche das obere Ende des Ausgabemundstücks 20/6 herausragt. Es ist erkennbar, daß bei der in Richtung des Pfeiles 32 erfolgenden Pumphubbewegung des Gehäuseteils 1/6 die Schließwand 57 die Ausgabeöffnung 56 öffnet. Bei dieser Pumphubbewegung wird das sich im Innern des Faltenbalgs 4/6 befindende Medium durch die Durchlaßöffnungen 18/6 hindurch in den Verbindungskanal 59 und durch diesen in den Ausgabekanal 21/6 bzw. durch die Ausgabeöffnung 56 nach außen gepreßt. Beim nachfolgenden Ansaughub, bei dem sich der Gehäuseteil 1/6 in Gegenrichtung des Pfeiles 32 wieder in die in Fig. 16 dargestellte Ausgangslage zurück bewegt, erfolgt ein erneutes Ansaugen von Medium aus dem Hohlraum 9 des Behälters 3 durch die Bohrung 58/6 des Ansaugstutzens 50 und durch die Durchlaßöffnungen 18/6 in den Innenraum des Faltenbalgs 4/6. Daß dabei nicht zugleich Medium aus dem Ausgabekanal 21/6 rückwärts in den Faltenbalg 4/6 gesaugt wird, beruht einerseits darauf, daß die Ausgabeöffnung 56 während des Ansaughubes geschlossen wird und darauf, daß die Viskosität des pastösen Mediums sowie das Querschnitts-Längsverhältnis des Ausgabekanals 21/6 und der kleinere Querschnitt des Verbindungskanals 9 dem Rückwärtsfließen im Ausgabekanal 21/6 einen großen Widerstand entgegensetzt.

Es ist auch denkbar, den unteren Endabschnitt des Faltenbalgs 4/6 so auszubilden, daß sein topfartiger Stirnwandabschnitt 17/8 den gesamten Innenraum der Ringwand 11/6 ausfüllt und eine im Durchmesser etwas kleinere Bohrung eines durchgehend zylindrischen Ansaugstutzens derart abdeckt, daß die Durchlaßöffnungen 18/6 unmittelbar auf der die Bohrung des Ansaugstutzens umgebenden planebenen Fläche aufliegen. In diesem Falle müßte dann an der Stelle, wo sich der Verbindungskanal 59 befindet, in der Ringwand des topfförmigen Stirnwandabschnittes 17/8 ein radialer Durchbruch angeordnet sein.

Bei dem in Fig. 19 dargestellten Pastenspender ist ein oberer, axial beweglicher Gehäuseteil 1/7 vorgesehen, der eine insgesamt zylindrische Form aufweist und einen zylindrischen Führungsabschnitt 6 besitzt, durch den er im Führungszylinder 7/6 eines zweiten Gehäuseteils 2/7 geführt ist. Der Gehäuseteil 1/7 ist mit einer oberen geschlossenen Stirnwand 19/7 und mit einem radial schräg nach oben verlaufenden Ausgabemundstück 20/7 versehen, dessen Ausgabekanal 21/7 mit dem Innenraum 67 eines konzentrisch zur Gehäuseachse 25 an der Innenseite der Stirnwand 19/7 angeformten zylindrischen rohrförmigen Ansatzes 24/7 verbunden ist. Als Pumporgan ist auch hier wieder ein Faltenbalg 4/6 vorgesehen, dessen oberer zylindrischer Ringwandabschnitt 30/6 den Rohrstutzen 24/7 festsitzend in der gleichen Weise umschließt, wie der Ringwandabschnitt 30/6 den Ansatz 24/6 in Fig. 16, d.h. daß der Ringwandabschnitt 30/6 am Umfang des Rohrstutzens 24/7 mit einer solchen Vorspannung anliegt, daß sie dem normalen Pumpdruck standhält. Der Ringwandabschnitt 30/6 wirkt somit nicht als Ventil. Der untere Endabschnitt des Faltenbalgs 4/6 ist genau gleich ausgebildet wie beim Ausführungsbeispiel der Fig. 16. Ein planebener Stirnwandabschnitt 17/7 sitzt dabei auf einer Ringschulter 14/7, die innenseitig an einem Stützring 11/7 der Zwischenwand 10/7 des Gehäuseteils 2/7 einstückig angeformt ist. Der topfförmige Stirnwandabschnitt 17/8 dient dabei als Ventilteil im Zusammenwirken mit einem Innenkonus 51 eines Ansaugstutzens 50 und schließt dessen Bohrung 58/6.

Wie die in den Fig. 20, 21 und 22 dargestellten Stirnansichten des Ausgabekanals 21/7 zeigen, ist am inneren Ende des Ausgabekanals 21/7 eine Zwischenwandung 68 angebracht, welche gemäß Fig. 20 sternförmige oder gemäß Fig. 21 kreisförmige und halbkreisförmige oder gemäß Fig. 22 schlitzförmige Durchbrüche 69 bzw. 70 bzw. 71 aufweist und die ein Rückwärtsfließen des sich bereits im Ausgabekanal 21/7 befindenden pastösen Mediums in den Innenraum 67 bzw. in den Faltenbalg 4/6 verhindert. Diese Zwischenwandung 68 mit ihren querschnittsmäßig gegenüber dem Querschnitt des Ausgabekanals 21/7 verringerten Durchbrüchen wirkt somit als Rücklaufbremse. Eine solche Rücklaufbremse kann auch die in den Fig. 23 und 24 dargestellte Form aufweisen, bei der der hintere Abschnitt des Ausgabekanal 21/7 mit querschnittsverengenden konischen Rippen 72 versehen ist.

Die Funktionsweise der in Fig. 19 dargestellten Dosierpumpe ist so : bei einem den Faltenbalg 4/6 komprimierenden Ausgabehub in Richtung des Pfeiles 32, wird eine entsprechende Menge des sich im Innern des Faltenbalgs 4/6 und in Hohlraum 67 befindenden Mediums durch die Zwischenwandung 68 bzw. durch den Ausgabekanal 21/7 nach außen gepreßt. Während der darauffolgenden Aufwärtsbewegung des Gehäuseteils 1/7 entgegen der Pfeilrichtung 32 wird weiteres Medium aus dem Hohlraum 9 des Behälters 3 durch den Ansaugstutzen 50 und durch die Durchlaßöffnungen 18/6 in den Faltenbalg 4/6 angesaugt. Dabei bewirken die Wandung 68 bzw. die konischen Rippen 72 einen Rückflußstau des sich im Ausgabekanal 21/7 befindenden Mediums.

Wenn man dem Ausgabekanal 21/7 eine ausreichende axiale Länge und/oder einen kleineren Querschnitt verlieht, kann u.U. auf die verengenden Mittel in Form der Wandung 68 bzw. der keilförmigen Rippen 72 verzichtet werden.

Die beiden in den Fig. 25 bis 27 bzw. 28 bis 30 dargestellten Spraypumpen sind speziel zum Versprühen von flüssigen Medien vorgesehen. Auch sie bestehen jeweils aus zwei Gehäuseteilen 1/8 und 2/8 bzw. 2/9 und einem Faltenbalg 4/8 bzw. 4/9. Der Gehäuseteil 1/8 besteht wiederum aus einem zylindrischen Hohlkörper 5/8 mit einem im Durchmesser geringfügig vergrößerten Führungsabschnitt 6/8, der in einem Führungszylinder 7/8 des Gehäuseteils 2/8 bzw. 2/9 teleskopartig axial, wie bei den anderen Beispielen, zwischen zwei Hubbegrenzungen beweglich geführt ist. In einem radial abstehenden zylindrischen Düsenstutzen, der das Ausgabemundstück 20/8 bildet, ist eine Sprühdüse 73 eingesetzt, die eine enge Sprühöffnung 74 aufweist und innerhalb dieser Sprühöffnung mit einem teilweise ringförmigen Verwirbelungsraum 75 versehen ist. Dieser Verwirbelungsraum 75 steht über einen Wanddurchbruch 76 mit einem Ringkanal 77 in Verbindung, der zwischen der zylindrischen Außenwand 78 und einem ebenfalls zylindrischen, von der Stirnwand 19/8 in das Innere des Gehäuseteils 1/8 konzentrisch hineinragenden Ansatz 24/8 gebildet ist. Wie bei den vorhergehend beschriebenen Ausführungsbeispielen ist auch hier die äußere Ringfläche 31/8 des Ansatzes 24/8 von einem mit einer gewissen Vorspannung dichtend anliegenden Ringwandabschnitt 30/8 umschlossen, der den oberen Endabschnitt des Faltenbalgs 4/8 und zugleich das bewegliche Schließorgan des ausgabeseitigen Pumpenventils bildet.

In der gemeinsamen radialen Mittelebene 78' der Sprühdüse 73 ist der Ansatz 24/8 mit einem axial verlaufenden Förderkanal 79 versehen, der axial innerhalb des radial elastischen Ringwandabschnittes 30/8 des Faltenbalgs 4/8 endet, so daß der obere Endabschnitt des Ringwandabschnittes 30/8 über eine axiale Länge von mindestens 1 bis 2 mm die geschlossene zylindrische Mantelfläche 31/8 umschließt.

Damit aus dem Ringkanal 77 nichts von der zu versprühenden Flüssigkeit in das Innere des Gehäuseteils 1/8 gelangen kann, ist der Ringwandabschnitt 30/8 an seinem Umfang mit einer umlaufenden Dichtungslippe 80 versehen, welche an der zylindrischen Innenfläche des Hohlkörpers 5/8 dichtend anliegt und dabei eine nach innen vorspringende Ringschulter 81 dieses Hohlkörpers 5/8 untergreift.

Bei der Spraypumpe der Fig. 29 ist der Ringwandabschnitt 30/8 des Faltenbalgs 4/9 statt mit einer Dichtungslippe 80 mit einer umlaufenden Dichtungsrippe 80/1 versehen, die zwischen der Ringschulter 81 und einer an der Innenseite des Hohlkörpers 5/9 umlaufend angeordneten Stützrippe 81/1 dichtend an der Wandung des Hohlkörpers 5/9 anliegt. Durch die Stützrippe 81/1 ist sichergestellt, daß sich die axiale Position des Ringwandabschnitts 30/8 auf dem Ansatz 24/9 nicht verändert, wenn sich im Ringkanal 77 ein hoher Druck aufbaut, der das Bestreben hat, den Ringwandabschnitt 30/8 in Richtung des Pfeiles 32 vom Ansatz 24/9 herunterzuschieben. Damit bei der Montage die Ringrippe 80/1 radial nach innen ausweichen kann, wenn sie über die Stützrippe 81/1 geschoben wird, ist der untere Abschnitt des Ansatzes 24/9 konisch verjüngt, so daß zwischen dem Ringwandabschnitt 30/8 und der Mantelfläche 31/8 des Ansatzes 24/9 in Höhe der Ringrippe 80/1 ein Luftspalt 80/3 entsteht.

Es ist aus den Fig. 25 und 29 erkennbar, daß der Außendurchmesser des zylindrischen Ansatzes 24/8 annähernd gleich groß ist wie der Außendurchmesser des faltbaren, zick-zackförmigen Teils des Faltenbalgs 4/8 und daß sich an diesen Ansatz der im übrigen hohlzylindrisch ausgebildet ist, über einen konischen Abschnitt 82 ein hohlzylindrischer Verdrängungskörper 83 anschließt, der länger ist als der faltbare, zick-zackförmige Teil des Faltenbalgs 4/8 und der mit seinem unteren Endabschnitt in einen zylindrischen Dehnwandabschnitt 84 hineinragt, welcher einstückig an dem faltbaren Teil des Faltenbalges 4/8 konzentrisch dazu verlaufend angeformt ist. Dabei weist der Verdrängungskörper 83 einen Außendurchmesser auf, der etwa um 0,3 bis 0,8 mm kleiner ist als der Innendurchmesser des zylindrischen Dehnwandabschnittes, so daß zwischen der Wandung des Dehnwandabschnittes 84 und der Mantelfläche des Verdrängungskörpers 83 Flüssigkeit hindurchströmen kann. Die Wandung des Dehnwandabschnittes 84 ist mit einer größeren Dicke versehen als der faltbare Teil und der Ringwandabschnitt 30/8. Der Dehnwandabschnitt 84 weist auch einen kleineren Innendurchmesser auf als der zugleich die Funktion eines Ventilteils ausübende Ringwandabschnitt 30/8. Mit seinem unteren Endabschnitt 84/1 sitzt der Dehnwandabschnitt 84 in einem zylindrischen Stützring 11/8, der Bestandteil einer Zwischenwand 10/8 des Gehäuseteils 2/8 ist. Dieser Stützring 11/8 ist konzentrisch zur Gehäuseachse 25 angeordnet. Auf der gegenüberliegenden Seite ist die Zwischenwand 10/8 mit einem Schlauchanschlußstutzen 55 versehen, dessen Bohrung 58 durch eine zentrale Auslaßöffnung 18/8 mit dem Innenraum des Stützringes 11/8 verbunden ist. Diese Auslaßöffnung 18/8 wird jedoch von einem dünnwandigen Ringwandabschnitt 17/8 elastisch dichtend abgedeckt. In diesem Stirnwandabschnitt 17/8 befinden sich, wie aus Fig. 28 erkennbar ist, auf einem gemeinsamen Radius mehrere Auslaßöffnungen 18/8, durch welche die durch den Schlauchanschlußstutzen 55 und die Auslaßöffnung 16/8 angesaugte Flüssigkeit in das Innere des Faltenbalgs 4/8 bzw. des Dehnwandabschnittes 84 gelangen kann, wenn ein Saughub des Faltenbalgs stattfindet. In entgegengesetzter Bewegungsrichtung, also während des in Richtung des Pfeiles 32 erfolgenden Druck- bzw. Ausgabehubes, ist die Auslaßöffnung 16/8 durch den Stirnwandabschnitt 17/8 dicht geschlossen. Mit Hilfe des Dehnwandabschnittes 84 und der radialen Spannung, mit welcher der Ringwandabschnitt 30/8 an der Mantelfläche 31/8 des Ansatzes 24/8 anliegt, wird erreicht, daß ein Flüssigkeitsaustritt aus dem Förderkanal 79 in den Ringkanal 77 und in die Sprühdüse 73 erst dann erfolgt, wenn im Faltenbalg 4/8, und dabei insbesondere im Dehnwandabschnitt 84 während des Druckhubes ein Druck von beispielsweise 6 bar aufgebaut ist, der genügt, um ein sofortiges Versprühen der aus der Sprühöffnung 74 der Sprühdüse 73 austretenden Flüssigkeit zu bewirken. Während des Druckaufbaus dehnt sich der Dehnwandabschnitt 84 in radialer Richtung um ein bestimmtes Maß aus bis die radiale Spannung größer wird als die Vorspannung des im Bereich des Förderkanals 79 an der Ringfläche 31/8 anliegenden Ringwandabschnitt 30/8. Durch die Zick-zackform des faltbaren Abschnittes des Faltenbalges 4/8 ist der radiale Dehnwiderstand, insbesondere wenn die Falten schon etwas zusammengedrückt sind, zu groß, als daß sich dort eine radiale Dehnung für den erforderlichen Sprühdruck erzeugen ließe. Der Verdrängungskörper dient vorwiegend zur Verkleinerung des Hohlraums im Faltenbalg 4/8 und damit zur Verringerung der Ausgabemenge pro Pumphub.

Der Vollständigkeit halber sei noch erwähnt, daß der Hohlraum des Ansatzes 24/8 durch eine Kappe 85, die auf axialen Rippen 86 aufsitzt, geschlossen ist.

Am Gehäuseteil 2/8 ist konzentrisch eine im Durchmesser größere, mit einem Innengewinde versehene Schraubkappe 89 angeformt, mit welcher die gesamte Dosierpumpe beispielsweise auf den mit einem entsprechenden Außengewinde versehenen Hals eines flaschen- oder dosenförmigen Behälters aufgeschraubt werden kann. Damit durch die Saughübe des Faltenbalgs 4/8 im Innern des Behälters kein Unterdruck entsteht, ist die Zwischenwand 10/8 mit Belüftungsöffnungen 87 versehen, durch welche Luft aus dem Innenraum des Gehäuseteils 2/8 in den Behälter einströmen kann. Dieser Innenraum des Gehäuseteils 2/8 steht durch den zwischen dem Führungsabschnitt 6/8 des Gehäuseteils 1/8 und dem Führungszylinder 7/8 des Gehäuseteils 2/8 bestehenden Ringspalt (radiales Spiel) mit der Außenatmosphäre in ständiger Verbindung. Damit jedoch während der Druck- bzw. Ausgabehübe, während welcher der Gehäuseteil 1/8 in Richtung des Pfeiles 32 in den Führungszylinder 7/8 geschoben wird, keine Flüssigkeit durch die Belüftungsöffnungen 87 in den Innenraum des Gehäuseteils 2/8 eindringen kann, ist unmittelbar über dem Stützring 11/8 an der Außenseite des Dehnwandabschnittes 84 des Faltenbalgs 4/8 eine umlaufende, schirmartig ausgebildete Dichtungslippe 88 einstückig angeformt, die an einer in ihrem unteren Bereich etwas verengten Innenfläche des Gehäuseteils 2/8 so anliegt, daß sie ein Einwegventil bildet, das Luft nach unten durchströmen läßt, eine Luftströmung nach oben aber verhindert.

Beim Ausführungsbeispiel der Fig. 29 und 30 ist der zum Teil zylindrische und zum Teil konische Ansatz 24/9 in Höhe der ersten Falte des faltbaren Abschnitts des Faltenbalgs 4/9 durch eine geschlossene Stirnwand 90 abgeschlossen und nicht mit einem einstückig angeformten Verdrängungskörper versehen, wie das bei der Spraypumpe der Fig. 25 bis 28 der Fall ist. Statt dessen ist in den ebenfalls mit einem Dehnwandabschnitt 84 versehenen Faltenbalg 4/9 ein zylindrischer, massiver, aus Kunststoff bestehender Verdrängungskörper 91 von zylindrischer Form axial beweglich angeordnet, der den Hohlraum des zylindrischen Dehnwandabschnitt 84 mit einem radialen Spiel von etwa 0,2 bis 0,4 mm nahezu vollständig ausfüllt und funktionell im wesentlichen die gleiche Aufgabe hat wie der Verdrängungskörper 83 bei der Spraypumpe der Fig. 25. Beide Verdrängungskörper 83 und 91 sind so ausgebildet, daß sie den Hohlraum des gesamten Faltenbalgs 4/8 bzw. 4/9, der ja wesentlich länger ist als der maximale Arbeitshub bzw. Ansaughub, bei vollständig gedrücktem Gehäuseteil 1/8 bzw. 1/9 annähernd vollständig auszufüllen, damit möglichst wenig Luft bzw. Flüssigkeit im Innern des Faltenbalgs 4/8 bzw. 4/9 zurückbleiben kann.

Während der Verdrängungskörper 83 als Hohlkörper ausgebildet und mit einer schließenden Stirnwand 83/1 versehen ist, weist der massive Verdrängungskörper 91 auf seiner unteren Stirnseite einen zentralen, kegelförmigen Ventilzapfen 92 auf, der in eine zentrale Auslaßöffnung 16/8 der Zwischenwand 10/8 und zugleich in eine im Durchmesser gleich große zentrale Durchlaßöffnung 18/9 der Stirnwand 17/10 des Faltenbalgs 4/9 ragt und diese verschließt, während der Arbeitshub des oberen Gehäuseteils 1/9 des Pfeiles 32 erfolgt, diese aber während des darauffolgenden in Gegenrichtung verlaufenden Ansaughubes öffnet.

Damit der Verdrängunskörper 91 in axialer Richtung nicht frei zwischen der Stirnwand 17/10 und der Stirnwand 90 innerhalb des Faltenbalgs 4/9 beweglich ist, ist er an seinem oberen Endabschnitt mit einer in die nach außen gerichtete unterste Falte des faltbaren Abschnitts des Faltenbalgs hineinragenden Ringrippe 91/1 versehen. Auf diese Weise ist sichergestellt, daß der Verdrängungskörper 91 mit seinem Ventilzapfen 92 seine Ventilfunktion stets ausführt, wobei in der Regel davon auszugehen ist, daß die Spraypumpe während der Benutzung in Vertikallage ihrer Gehäuseachse 25 gehalten wird, und der Verdrängungskörper 91 durch sein Eigengewicht in Schließlage gehalten wird.

Bei allen vorstehend beschriebenen Ausführungsformen ist das Hauptmerkmal verwirklicht, daß die gesamte Dosier- bzw. Spraypumpe aus einer minimalen Anzahl von unterschiedlichen, separat hergestellten Einzelteilen, nämlich im wesentlichen aus zwei Gehäuseteilen und einem Faltenbalg, besteht und das die Verbindungen zwischen dem Faltenbalg und den Gehäuseteilen von einstückig angeformten Teilen des Faltenbalgs gebildet werden, die zugleich Ventilfunktionen ausüben. Dadurch wird ein Minimum sowohl an Einzelteilen und Material als auch an Montagekosten erreicht und zwar ohne Verminderung der Funktionsqualität insbesondere der Ventileigenschaften gegenüber den bekannten Dosierpumpen.

Durch einfaches Zusammenfügen der wenigen Einzelteile in der beschriebenen Weise kommen dichte Verbindungen zwischen bestimmten Bestandteilen der Gehäuseteile 1 bis 1/9 bzw. 2 bis 2/9 einerseits und dem Faltenbalg 4 bis 4/9 andererseits zustande, und im gleichen Zuge werden auch die beiden Pumpenventile gebildet.

## Ansprüche

1. Dosier- und Spraypumpe zur Abgabe dosierter Mengen flüssiger oder niederviskoser Stoffe aus flaschen- oder dosenartigen Behältern (3) mit einem Faltenbalg (4 bis 4/9) aus elastischem Kunststoff, der verbindend zwischen zwei Gehäuseteilen (1, 1/1, 1/4, 1/6 bis 1/9 ; 2, 2/1 bis 2/9) aus formstabilem Kunststoff angeordnet ist, die in axialer Richtung teleskopartig zwischen zwei Hubbegrenzungen gegeneinander beweglich und durch die axialen Rückstellfederkräfte des Faltenbalgs (4 bis 4/9) rückstellbar sind, wobei wenigstens am ansaugseitigen Ende des Faltenbalgs (4 bis 4/9) ein Pumpventil mit einem beweglichen Schließorgan angeordnet ist, welches während der Pumphübe des einen Gehäuseteils (1, 1/1, 1/4, 1/6 bis 1/9) und des Faltenbalgs (4 bis 4/9) selbsttätig in Ansaugrichtung öffnet und in Rücklaufrichtung schließt, und wobei ein Gehäuseteil (1, 1/1, 1/4, 1/6 bis 1/9) mit einem Ausgabemundstück (20, 20/4, 20/6, 20/7, 20/8) versehen ist und ein Gehäuseteil (2, 2/1, bis 2/9) mittels eines Verbindungsteils (49, 89) auf den Hals des Behälters aufsetzbar oder mit einem angeformten Behälter (3) versehen ist, **dadurch gekennzeichnet,** daß der Faltenbalg (4 bis 4/9) an seinem einen Ende als axiale Verlängerung einen radial elastischen, hülsenartigen Ringwandabschnitt (30, 30/3, 30/6, 30/8) aufweist, der die Mantelfläche (31) eines einstückig an dem die Pumphübe ausführenden Gehäuseteil (1, 1/1, 1/4, 1/6 bis 1/9) angeformten ring- oder topfförmigen Ansatzes (24, 24/8, 24/9) ventilartig dichtend und radial abhebbar umschließt, und daß das andere Ende des Faltenbalgs (4 bis 4/9) mit einem wenigstens eine Durchlaßöffnung (18, 18/3, 18/4, 18/5, 18/6, 18/8, 18/9) aufweisenden Stirnwandabschnitt (17 bis 17/10) versehen ist, der wenigstens eine Auslaßöffnung (16, 16/1, 16/3, 16/8, 38, 58, 58/6, 58/7) einer Gehäusestirnwand (10/6, 10/7, 10/8, 12, 12/1) des zweiten Gehäuseteils (2, 2/1 bis 2/9) ventilartig abdeckt oder den Ventilsitz für ein an einem im Faltenbalg (4/9) angeordneten Verdrängungskörper (91) angeformtes Ventilschließorgan (92) bildet.

2. Dosier- und Spraypumpe nach Anspruch 1, dadurch gekennzeichnet, daß der Faltenbalg (4, 4/2, 4/3, 4/4) als Ventilteil ansaugseitig einen ringförmigen Stirnwandabschnitt (17) aufweist, der mit einer zentralen Durchlaßöffnung (18) versehen ist und der auf der Außenseite einer mit einer oder mehreren Auslaßöffnungen (16, 16/1) versehenen Gehäusestirnwand (12) in Rücklaufrichtung dichtend und in Ansaug- bzw. Ausgaberichtung elastisch abhebbar aufliegt.

3. Dosier- und Spraypumpe nach Anspruch 1 oder 2, dadurch gekennzeichnet, daß der Faltenbalg (4/1) ansaugseitig mehrere zungenförmige Stirnwandabschnitte (17/1) als bewegliche Ventilteile aufweist, welche einzelne Auslaßöffnungen (16) der Gehäusestirnwand (12/1) elastisch dichtend abdecken.

4. Dosier- und Spraypumpe nach Anspruch 1 oder 2, dadurch gekennzeichnet, daß die Auslaßöffnungen der Gehäusestirnwand (12, 12/1) in Form mehrerer runder Durchbrüche (16, 16/1) auf einen gemeinsamen Radius außermittig angeordnet sind und daß die zentrale Durchlaßöffnung (18) innerhalb dieser Durchbrüche (16, 16/1) liegt.

5. Dosier- und Spraypumpe nach Anspruch 2, dadurch gekennzeichnet, daß der Stirnwandabschnitt (17) des Faltenbalgs (4, 4/2, 4/4) und ein an der Gehäusestirnwand (12, 12/2, 12/4) ausgebildeter Ringabschnitt (14, 14/1, 14/2) konisch ausgebildet sind.

6. Dosier- und Spraypumpe nach Anspruch 2, dadurch gekennzeichnet, daß die Gehäusestirnwand (12/3) eine zentrale Auslaßöffnung (16/3) aufweist, auf deren Rand ein zentraler, kreisförmiger, von mehreren segmentartigen Durchlaßöffnungen (18/3) umgebener und durch Radialstege (41) mit einem ringförmigen Stirnwandabschnitt (17/2) verbundener Stirnwandabschnitt (17/3) des Faltenbalgs (4/3) elastisch dichtend anliegt.

7. Dosier- und Spraypumpe nach Anspruch 1, dadurch gekennzeichnet, daß der Faltenbalg (4/2) als ansaugseitiges Ventilteil einen an einem ringförmigen Stirnwandabschnitt (12) des Faltenbalgs (4/2) einstückig angeformten, stirnseitig in den Faltenbalg (4/2) hineinragenden Schlauchansatz (39) aufweist, der eine ebenfalls stirnseitig in den Faltenbalg (4/2) hineinragende, durch eine Stirnwand (37/2) abgeschlossene und mit radialen Durchlaßöffnungen (38) versehene Ringwand (37) der Gehäusestirnwand (14/2) elastisch und dicht anliegend umschließt.

8. Dosier- und Spraypumpe nach Anspruch 2 oder 6, dadurch gekennzeichnet, daß die Gehäusestirnwand (12/4) mit einem zentrisch angeordneten Schlauchanschlußstutzen (55) versehen ist, dessen Bohrung (58) von einem zentralen Faltenbalg-Stirnwandabschnitt (17/2), der von radial nach außen versetzten Durchlaßöffnungen (18/3) umgeben ist, elastisch dichtend abgedeckt ist.

9. Dosier- und Spraypumpe nach Anspruch 8, dadurch gekennzeichnet, daß der Schlauchanschlußstutzen (55/1) stirnwandseitig eine konische Erweiterung (55/2) aufweist, in welche ein nippelartiger Stirnwandvorsprung (17/6) des Faltenbalgs (4/5) dicht anliegend hineinragt.

10. Dosier- und Spraypumpe nach einem der Ansprüche 2, 4 oder 5, dadurch gekennzeichnet, daß die Gehäusestirnwand (12), auf welcher ein ringförmiger Stirnwandabschnitt (17) des Faltenbalgs (4) aufliegt, in einem bestimmten Ringsektor große Durchlaßöffnungen (16) und in einem anderen Ringsektor eine oder mehrere kleine Durchlaßöffnungen (16/1) aufweist.

11. Dosier- und Spraypumpe nach Anspruch 10, dadurch gekennzeichnet, daß der radial elastische Ringwandabschnitt (30) des Faltenbalgs (4 bis 4/4) ausgabeseitig als axiale Verlängerung eines sich axial außerhalb einer Ringschulter (28) erstreckenden Ringbundes (29) ausgebildet ist, der dichtend an der Innenseite eines zur Faltenbalgachse (25) konzentrischen Rohrstutzens (23) des mit dem Ausgabemundstück (20, 20/4) versehenen Gehäuseteils (1, 1/1, 1/2) anliegt.

12. Dosier- und Spraypumpe nach Anspruch 1, dadurch gekennzeichnet, daß der topfförmige Ansatz (24/1, 24/3) wenigstens eine ebene Anlagefläche (31/1) für den elastischen Ringwandabschnitt (30) aufweist, die durch einen axialen Förderkanal (33/1) oder eine schlitzförmige Ausnehmung (33) unterbrochen ist.

13. Dosier- und Spraypumpe nach Anspruch 1, dadurch gekennzeichnet, daß der Ansatz (24/3) eine im wesentlichen quadratische Querschnittsform aufweist und in der Mitte wenigstens eines der ebenen Wandabschnitte (24/2) eine schlitzförmige Ausnehmung (33) oder einen Förderkanal (33/1) angeordnet ist.

14. Dosier- und Spraypumpe nach Anspruch 13, dadurch gekennzeichnet, daß der Rohrstutzen (23) stirnseitig auf der Ringschulter (28) des Faltenbalgs (4, 4/1, 4/2, 4/3, 4/4) dichtend aufsitzt.

15. Dosier- und Spraypumpe nach Anspruch 1 oder 14, dadurch gekennzeichnet, daß das Ausgabemundstück (20, 20/4) und der Rohrstutzen (23) sowie ein die Ringfläche (31) aufweisender, topf-, zapfen-, ring- oder hülsenförmiger Ansatz (24) einstückig an dem Gehäuseteil (1, 1/1, 1/2, 1/4) angeformt sind, wobei ein zwischen dem Ansatz (24) und dem Rohrstutzen (23) gebildeter Kanal (22) mit dem Ausgabekanal (21, 21/4) des Ausgabemundstücks (20, 20/4) verbunden ist.

16. Dosier- und Spraypumpe nach einem der Ansprüche 1, 11, 14 oder 15, dadurch gekennzeichnet, daß die ausgabeseitige, vom radial elastischen Ringwandabschnitt (30) des Faltenbalgs (4, 4/1, 4/2 4/3, 4/4) umschlossene Ringfläche (31) insgesamt konisch ist oder einen in den dehnbaren Ringwandabschnitt (30) hineinragenden konischen Abschnitt (34, 34/1) aufweist.

17. Dosier- und Spraypumpe nach einem der Ansprüche 1 bis 12 oder 15 bis 16, dadurch gekennzeichnet, daß der Innendurchmesser des einen elastischen, beweglichen Ventilteil bildenden Ringwandabschnitts (30) bzw. des Schlauchansatzes (39) des Faltenbalgs (4/2) größer ist als der Außendurchmesser des Ansatzes (24) bzw. der Ringwand (37) und daß der Ringwandabschnitt (30) bzw. der Schlauchansatz (39) mit einem sich in Ausgabe- bzw. in Ansaugrichtung verjüngenden, konischen Endabschnitt (30/3 bzw. 39/3) versehen ist, der linienförmig oder in Form eines schmalen, ringförmigen Flächenstreifens an der Ringfläche (31, 37/2) des Ansatzes (24) bzw. der Ringwand (37) oder auf der Ringkante (37/3) der Ringwand (37) dichtend anliegt.

18. Dosier- oder Spraypumpe nach Anspruch 17, dadurch gekennzeichnet, daß der konische Endabschnitt (30/4, 39/3) des Ringwandabschnitts (30) und/ oder des Schlauchansatzes (39) wellenförmig oder zick-zackförmig profiliert ist und eine zylindrische Öffnung aufweist, deren Innenfläche an der Mantelfläche des Ansatzes (24) bzw. an der Mantelfläche (37/2) der Ringwand (37) anliegt.

19. Dosier- und Spraypumpe nach einem der Ansprüche 1, 11 und 14 bis 18 dadurch gekennzeichnet, daß ein axialer Teilabschnitt der Wandung des in den ausgabeseitigen, radial elastischen Ringwandabschnitt (30) des Faltenbalgs (4) hineinragenden Ansatzes (24) mit schlitzförmigen Ausnehmungen (33) versehen ist, welche in axialer Ausgaberichtung innerhalb der vom Ringwandabschnitt (30) des Faltenbalgs (4) umschlossenen Ringfläche (31) enden.

20. Dosier- und Spraypumpe nach einem der Ansprüche 1, 11 und 14 bis 19, dadurch gekennzeichnet, daß die Wanddicke des Ringbundes (29) des Faltenbalgs (4, 4/1, 4/2, 4/3, 4/4) der radialen Weite des zwischen dem Rohrstutzen (23) und dem topf-, zapfen-, ring- oder hülsenförmigen Ansatz (24) des Gehäuseteils (1, 1/1, 1/2) vorhandenen Ringkanals (22) enspricht und daß der Außendurchmesser des elastischen Wandabschnitts (30), der die Ringfläche (31) des Ansatzes (24) umschließt, kleiner ist als der Innendurchmesser des Rohrstutzens (23).

21. Dosier- und Spraypumpe nach einem der Ansprüche 13 bis 20, dadurch gekennzeichnet, daß der elastische Ringwandabschnitt (30) des Faltenbalgs (4) als Ventilorgan wenigstens einen zungenförmigen Axialvorsprung (30/2) aufweist, der eine schlitzförmige Ausnehmung (33) oder einen Förderkanal (33/1) des Ansatzes (24, 24/1) schließend abdeckt.

22. Dosier- und Spraypumpe nach einem der Ansprüche 1 bis 21, dadurch gekennzeichnet, daß der Innenraum des Faltenbalgs (4/6) durch die in seiner ansaugseitigen Faltenbalgstirnwand (17/8) angeordnete(n) Durchlaßöffnung(en) (18/6) oder durch einen zusätzlichen, in der Nähe der Gehäusestirnwand angeordneten Verbindungskanal (59) mit einem neben dem Faltenbalg angeordneten, im wesentlichen rohrartigen Ausgabemundstück (20/6) verbunden ist.

23. Dosier- und Spraypumpe nach Anspruch 22, dadurch gekennzeichnet, daß das Ausgabemundstück (20/6) aus einem an der Gehäusezwischenwand (10/7) befestigten oder einstückig an dieser angeformten, achsparallelen Düsenstock mit einer radial nach außen gerichteten Ausgabeöffnung (56) besteht.

24. Dosier- und Spraypumpe nach Anspruch 23, dadurch gekennzeichnet, daß eine die Ausgabeöffnung (56) verschließende Schließwand (57) einstückig an dem relativ zum Ausgabemundstück (20/6) beweglichen Gehäuseteil (1/6) angeformt ist und daß dieser Gehäuseteil (1/6) eine Stirnwand (19/6) mit einer das Ausgabemundstück (20/6) eng umschließenden Öffnung aufweist.

25. Dosier- und Spraypumpe nach Anspruch 22 oder 23, dadurch gekennzeichnet, daß ein ansaugseitiger Stirnwandabschnitt (17/8) des Faltenbalgs (4/6), der auf einer auf der Außenseite einer Gehäusezwischenstirnwand (10/6) auf einem Stützring (11/6) angeordneten konischen oder planebenen Ringschulter (14/6) dichtend aufsitzt, im Zentrum ein durch elastische Verbindungsstege (41/6) einstückig mit ihm verbundenes topfförmiges Ventilschließorgan (17/8) aufweist, das mit dem Stützring (11/6) einen Ringkanal (63) bildet, der einerseits durch einen radialen Verbindungskanal (59) mit dem Ausgabemundstück und andererseits durch die Durchlaßöffnungen (18/6) mit dem Innenraum des Faltenbalgs (4/6) in Verbindung steht.

26. Dosier- und Spraypumpe nach einem der Ansprüche 22 bis 25, dadurch gekennzeichnet, daß der ausgabeseitige, hülsenartige Ringwandabschnitt (30/6) des Faltenbalgs (4/6) mit einer dem Ausgabedruck standhaltenden, radialen Vorspannung einen ring-, topf- oder rohrartigen Ansatz (24/7) des axial beweglichen Gehäuseteils (1/7) dichtend umspannt.

27. Dosier- und Spraypumpe nach einem der Ansprüche 1 bis 10 oder 26, dadurch gekennzeichnet, daß der Ausgabekanal (21/7) des im wesentlichen radial nach außen gerichteten Ausgabemundstücks (20/7) direkt mit dem Innenraum eines vom ausgabeseitigen Ringwandabschnitt (30/6) des Faltenbalgs (4/6) mit einer dem Ausgabedruck standhaltenden Vorspannung umschlossenen, rohrstutzenartig ausgebildeten und auf der dem Faltenbalg (4/6) zugekehrten Stirnseite offenen Ansatz (24/7) in Verbindung steht.

28. Dosier- und Spraypumpe nach Anspruch 27, dadurch gekennzeichnet, daß der Ausgabekanal (21/7) des Ausgabemundstücks (20/7) im Bereich eines dem Ansatz zugekehrten Abschnitts querschnittsverengende Stauelemente (68, 72) aufweist, welche den Fließwiderstand eines durchfließenden pastösen Mediums, insbesondere in Rückströmrichtung erhöhen.

29. Dosier- und Spraypumpe nach einem der Ansprüche 1 bis 22, dadurch gekennzeichnet, daß der Faltenbalg (4/8, 4/9) in einem zwischen einem der beiden Ventilteile (24/8, 17/9) und seinem zick-zackförmigen, faltbaren Faltabschnitt einen nicht faltbaren, zylindrischen Dehnwandabschnitt (84) aufweist.

30. Dosier- und Spraypumpe nach Anspruch 29, dadurch gekennzeichnet, daß der nichtfaltbare Dehnwandabschnitt (84) des Faltenbalgs (4/8, 4/9) eine größere Wanddicke aufweist als der den ausgabeseitigen Ventilteil bildende Ringwandabschnitt (30/8).

31. Dosier- und Spraypumpe nach Anspruch 29 oder 30, dadurch gekennzeichnet, daß der Innemdurchmesser des Dehnwandabschnitts (84) um etwa ein Drittel kleiner ist als der Innendurchmesser des den ausgabeseitigen Ventilteil bildenden Ringwandabschnitts (30/8).

32. Dosier- und Spraypumpe nach einem der Ansprüche 22 bis 26 und 28 bis 30, dadurch gekennzeichnet, daß der vom ausgabeseitigen Ringwandabschnitt (30/8) des Faltenbalgs (4/8, 4/9) umspannte Ansatz (24/8, 24/9) einen zumindest in den faltbaren Faltabschnitt des Faltenbalgs (4/8) eintauchenden Verdrängungskörper (83) aufweist.

33. Dosier- und Spraypumpe nach einem der Ansprüche 28 bis 31, dadurch gekennzeichnet, daß im Faltenbalg (4/9) ein loser Verdrängungskörper (91) axial beweglich angeordnet ist, dessen Durchmesser kleiner ist als der Innendurchmesser des nicht faltbaren, zylindrischen Dehnwandabschnitts (84).

34. Dosier- und Spraypumpe nach Anspruch 32 oder 33, dadurch gekennzeichnet, daß der Verdrängungskörper an seiner ansaugseitigen Stirnfläche mit einem in eine zentrale Durchlaßöffnung (10/8) der Gehäusezwischenwand (10/8) und/oder der Faltenbalgstirnwand (17/10) schließend eingreifenden Ventilschließorgan (92) versehen ist.

35. Dosier- und Spraypumpe nach einem der Ansprüche 29 bis 34, dadurch gekennzeichnet, daß der von dem den ausgabeseitigen Ventilteil bildenden Ringwandabschnitt (30/8) umschlossene Ansatz (24/8, 24/9) durch eine Stirnwand (83/1, 90) gegen den Innenraum des Faltenbalgs (4/8, 4/9) geschlossen ist und in seiner Mantelfläche einen zumindest annähernd in der radialen Mittelebene des Ausgabemundstücks (20/8) liegenden, axialen Förderkanal (79) aufweist, der innerhalb des Ringwandabschnitts (30/8) des Faltenbalgs (4/8, 4/9) endet.

36. Dosier- und Spraypumpe nach einem der Ansprüche 1, 11 bis 21 oder 27 bis 34, dadurch gekennzeichnet, daß der den ausgabeseitigen Ventilteil bildende Ringwandabschnitt (30/8) auf seiner Außenseite mit einer umlaufenden Ringdichtungslippe (80) versehen ist, die an der Innenfläche des mit dem Ausgabemundstück (20/8) versehenen Gehäuseteils (1/8, 1/9) und/oder an einer Ringschulter (81) dieses Gehäuseteils dichtend anliegt.

37. Dosier- und Spraypumpe nach Anspruch 36, dadurch gekennzeichnet, daß der Ringwandabschnitt (30/9) mit einer außen umlaufenden, sich axial in Komprimierungsrichtung des Faltenbalgs (4/9) auf einer auf der Innenseite des Hohlkörpers (5/9) angeordneten Ringrippe (81/1) abstützendenden Dichtungsrippe (80/1) versehen ist.


**Claims**

1. Metering and spray pump for dispensing metered quantities of liquid or low-viscosity substances from bottle-type or can-type vessels (3), comprising a bellows (4 to 4/9) of elastic plastics material, which is disposed connectingly between two housing parts (1, 1/1, 1/4, 1/6 to 1/9 ; 2, 2/1 to 2/9) of form-stable plastics, which are telescopically movable relative to each other in the axial direction between two stroke limiters and can be restored by the axial restoring spring forces of the bellows (4 to 4/9), wherein at least at the suction end of the bellows (4 to 4/9) a pump valve having a movable closure member is disposed, which during the pumping strokes of the one housing part (1, 1/1, 1/4, 1/6 to 1/9) and of the bellows (4 to 4/9) automatically opens in the suction direction and closes in the return direction, and wherein one housing part (1, 1/1, 1/4, 1/6 to 1/9) is provided with a discharge mouthpiece (20, 20/4, 20/6, 20/7, 20/8) and one housing part (2, 2/1 to 2/9) can be seated by means of a connecting piece (49, 89) onto the neck of the vessel or is provided with an integrally formed vessel (3), characterized in that, the bellows (4 to 4/9) possesses, at its one end, as an axial extension a radially elastic, sleeve-like annular wall portion (30, 30/3, 30/6, 30/8), which surrounds in the manner of a valve, sealingly and radially liftable, the wall surface (31) of an annular or pot-shaped projection (24, 24/8, 24/9) integrally formed in one piece with the housing part (1, 1/1, 1/4, 1/6 to 1/9) which executes the pump strokes, and that the other end of the bellows (4 to 4/9) is provided with an end wall portion (17 to 17/10) having at least one passage opening (18, 18/3, 18/4, 18/5, 18/6, 18/8, 18/9), which (end wall portion) covers in the manner of a valve at least one outlet opening (16, 16/1, 16/3, 16/8, 38, 58, 58/6, 58/7) of a housing end wall (10/6, 10/7, 10/8, 12, 12/1) of the second housing part (2, 2/1 to 2/9) or forms the valve seating for a valve closure member (92) integrally formed on a displacement member (91) disposed in the bellows (4/9).

2. Metering and spray pump according to Claim 1, characterized in that the bellows (4, 4/2, 4/3, 4/4) possesses at the suction end, as valve component, an annular end wall portion (17), which is provided with a central passage opening (18) and which rests, sealingly in the return direction and elastically liftable in the suction or discharge direction, on the outer face of a housing end wall (12) equipped with one or more outlet openings (16, 16/1).

3. Metering and spray pump according to Claim 1 or 2, characterized in that the bellows (4/1) possesses, at the suction end, a plurality of tongue-shaped end wall portions (17/1) as movable valve components, which elastically sealingly cover individual outlet openings (16) of the housing end wall (12/1).

4. Metering and spray pump according to Claim 1 or 2, characterized in that the outlet openings of the housing end wall (12, 12/1) are disposed off-centre in the form of a plurality of round apertures (16, 16/1) on a common radius and that the central passage opening (18) lies within these apertures (16, 16/1).

5. Metering and spray pump according to Claim 2, characterized in that the end wall portion (17) of the bellows (4, 4/2, 4/4) and an annular portion (14, 14/1, 14/2) formed on the housing end wall (12, 12/2, 12/4) are of conical shape.

6. Metering and spray pump according to Claim 2, characterized in that the housing end wall (12/3) possesses a central outlet opening (16/3), against the edge of which there bears, elastically sealingly, a central, circular end wall portion (17/3) of the bellows (4/3), surrounded by a plurality of segment-shaped passage openings (18/3) and connected by radial webs (41) with an annular end wall portion (17/2).

7. Metering and spray pump according to Claim 1, characterized in that the bellows (4/2) possesses, as suction-side valve component, a hose projection (39), integrally formed in one piece on an annular end wall portion (12) of the bellows (4/2) and penetrating at the end into the bellows (4/2), which (hose projection) elastically and sealingly surrounds and bears against an annular wall (37) of the housing end wall (14/2), also penetrating at the end into the bellows (4/2), closed by an end wall (37/2) and provided with radial passage openings (38).

8. Metering and spray pump according to Claim 2 or 6, characterized in that the housing end wall (12/4) is provided with a centrally disposed hose attachment stub (55), the bore (58) of which is elastically sealingly covered by a central bellows end wall portion (17/2), which is surrounded by radially, outwardly offset passage openings (18/3).

9. Metering and spray pump according to Claim 8, characterized in that the hose attachment stub (55/1) possesses, at its end, a conical divergence (55/2), into which a nipple-like end wall projection (17/6) of the bellows (4/5) penetrates in sealing bearing.

10. Metering and spray pump according to one of Claims 2, 4 or 5, characterized in that the housing end wall (12), against which an annular end wall portion (17) of the bellows (4) bears, possesses, in a specific annular sector, large passage openings (16) and, in another annular sector, one or more small passage openings (16/1).

11. Metering and spray pump according to Claim 10, characterized in that the radially elastic annular wall portion (30) of the bellows (4 to 4/4) is formed, at the discharge end, as an axial extension of an annular flange (29) extending axially beyond an annular shoulder (28), which (annular flange) bears sealingly against the inside of a pipe stub (23), concentric to the bellows axis (25), of the housing part (1, 1/1, 1/2) equipped with the discharge mouthpiece (20, 20/4).

12. Metering and spray pump according to Claim 1, characterized in that the pot-shaped projection (24/1, 24/3) possesses at least one plane bearing surface (31/1) for the elastic annular wall portion (30), which is interrupted by an axial feed duct (33/1) or a slit-shaped recess (33).

13. Metering and spray pump according to Claim 1, characterized in that the projection (24/3) has a substantially square cross-sectional shape and that in the middle of at least one of the flat wall portions (24/2) a slit-shaped recess (33) or a feed duct (33/1) is disposed.

14. Metering and spray pump according to Claim 13, characterized in that the pipe stub (23) sits sealingly at its end upon the annular shoulder (28) of the bellows (4, 4/1, 4/2, 4/3, 4/4).

15. Metering and spray pump according to Claim 1 or 14, characterized in that the discharge mouthpiece (20, 20/4) and the pipe stub (23) and also a pot-shaped, stub-shaped, annular or sleeve-shaped projection (24), possessing the annular surface (31), are integrally formed in one piece on the housing part (1, 1/1, 1/2, 1/4), a duct (22) formed between the projection (24) and the pipe stub (23) being connected with the discharge duct (21, 21/4) of the discharge mouthpiece (20, 20/4).

16. Metering and spray pump according to one of Claims 1, 11, 14 or 15, characterized in that the annular surface (31) at the discharge side, surrounded by the radially elastic annular wall portion (30) of the bellows (4, 4/1, 4/2, 4/3, 4/4), is generally conical or possesses a conical portion (34, 34/1) penetrating into the extensible annular wall portion (30).

17. Metering and spray pump according to one of Claims 1 to 12 or 15 to 16, characterized in that the internal diameter of the annular wall portion (30) or hose projection (39) of the bellows (4/2) forming an elastic, movable valve component is greater than the external diameter of the projection (24) or annular wall (37), and that the annular wall portion (30) or hose projection (39) is provided with a conical end portion (30/3 or 39/3), tapering in the discharge or suction direction, which bears sealingly in the form of a line or a slender, annular strip, against the annular surface (31, 37/2) of the projection (24) or annular wall (37) or against the annular edge (37/3) of the annular wall (37).

18. Metering and spray pump according to Claim 17, characterized in that the conical end portion (30/4, 39/3) of the annular wall portion (30) and/or of the hose projection (39) is profiled to undulating or zigzag shape and has a cylindrical opening, the internal surface of which bears against the wall face of the projection, (24) or against the wall face (37/2) of the annular wall (37).

19. Metering and spray pump according to one of Claims 1, 11 and 14 to 18, characterized in that an axial partial portion of the wall of the projection (24), penetrating into the radially elastic annular wall portion (30) of the bellows (4) at the discharge end, is provided with slit-shaped recesses (33), which terminate, in the axial discharge direction, within the annular surface (31) surrounded by the annular wall portion (30) of the bellows (4).

20. Metering and spray pump according to one of Claims 1, 11 and 14 to 19, characterized in that the wall thickness of the annular flange (29) of the bellows (4, 4/1, 4/2, 4/3, 4/4) corresponds to the radial width of the annular duct (22), present between the pipe stub (23) and the pot-shaped, stub-shaped, annular or sleeve-shaped projection (24) of the housing part (1, 1/1, 1/2), and that the external diameter of the elastic wall portion (30) which surrounds the annular surface (31) of the projection (24) is smaller than the internal diameter of the pipe stub (23).

21. Metering and spray pump according to one of Claims 13 to 20, characterized in that the elastic annular wall portion (30) of the bellows (4) possesses, as valve member, at least one tongue-shaped axial projection (30/2), which closingly covers a slit-shaped opening (33) or a feed duct (33/1) of the projection (24, 24/1).

22. Metering and spray pump according to one of Claims 1 to 21, characterized in that the internal space of the bellows (4/6) is connected by the passage openings (18/6), disposed in its bellows end wall (17/8) at the suction end, or by an additional connecting duct (59), disposed in the vicinity of the housing end wall, with a substantially tubular discharge mouthpiece (20/6) disposed adjacent to the bellows.

23. Metering and spray pump according to Claim 22, characterized in that the discharge mouthpiece (20/6) consists of an axially parallel nozzle piece, fixed to the housing partition wall (10/7) or integrally formed with it, and having a radially outwardly orientated discharge opening (56).

24. Metering and spray pump according to Claim 23, characterized in that a closure wall (57) closing the discharge opening (56) is integrally formed in one piece on the housing part (1/6) movable relative to the discharge mouthpiece (20/6), and that this housing part (1/6) possesses an end wall (19/6) having an opening closely surrounding the discharge mouthpiece (20/6).

25. Metering and spray pump according to Claim 22 or 23, characterized in that an end wall portion (17/8) of the bellows (4/6) at the suction side which sealingly bears on a conical or flat annular shoulder (14/6), disposed on the outside of a housing intermediate end call (10/6) on a support ring (11/6), possesses, at the centre, a pot-shaped valve closure member (17/8) connected with it in one piece by elastic connecting webs (41/6), which (closure member) forms together with the support ring (11/6) and annular duct (63), which communicates, on the one hand, by a radial connecting duct (59) with the discharge mouthpiece and, on the other hand, by the passage openings (18/6) with the internal space of the bellows (4/6).

26. Metering and spray pump according to one of Claims 22 to 25, characterized in that the sleeve-like annular wall portion (30/6) of the bellows (4/6) at the discharge end sealingly fits around an annular, pot-shaped or tubular projection (24/7) of the axially movable housing part (1/7) with a radial prestress that withstands the discharge pressure.

27. Metering and spray pump according to one of Claims 1 to 10 or 26, characterized in that the discharge duct (21/7) of the substantially radially outwardly orientated discharge mouthpiece (20/7) is directly in communication with the internal space of a pipe stub-shaped projection (24/7), open at the end towards the bellows (4/6) and surrounded by the annular wall portion (30/6) at the discharge end of the bellows (4/6) with a prestress that resists the discharge pressure.

28. Metering and spray pump according to Claim 27, characterized in that the discharge duct (21/7) of the discharge mouthpiece (20/7) possesses, in the region of a portion towards the projection, cross-section reducing baffle elements (68, 72), which increase the flow resistance of a pasty medium flowing through, especially in the return flow direction.

29. Metering and spray pump according to one of Claims 1 to 22, characterized in that the bellows (4/8, 4/9) possesses, in a region between one of the two valve components (24/8, 17/9) and its zigzag shaped, foldable portion, a non-foldable, cylindrical expansion wall portion (84).

30. Metering and spray pump according to Claim 29, characterized in that the non-foldable expansion wall portion (84) of the bellows (4/8, 4/9) has a greater wall thickness than the annular wall portion (30/8) forming the valve component at the discharge end.

31. Metering and spray pump according to Claim 29 or 30, characterized in that the internal diameter of the expansion wall portion (84) is smaller by approximately one-third than the internal diameter of the annular wall portion (30/8) forming the valve component at the discharge end.

32. Metering and spray pump according to one of Claims 22 to 26 and 28 to 30, characterized in that the projection (24/8, 24/9), encompassed by the annular wall portion (30/8) of the bellows (4/8, 4/9) at the discharge end, has a displacement body (83) penetrating at least into the foldable portion of the bellows (4/8).

33. Metering and spray pump according to one of Claims 28 to 31, characterized in that a loose displacement body (91) is disposed axially movable in the bellows (4/9), the diameter of which body is smaller than the internal diameter of the non-foldable, cylindrical expansion wall portion (84).

34. Metering and spray pump according to Claim 32 or 33, characterized in that the displacement body is provided, at its end face towards the suction side, with a valve closure member (92), which engages closingly into a central passage opening (10/8) of the housing intermediate wall (10/8) and/or of the bellows end wall (17/10).

35. Metering and spray pump according to one of Claims 29 to 34, characterized in that the projection (24/8, 24/9), surrounded by the annular wall portion (30/8) forming the valve component at the discharge side, is closed off by an end wall (83/1, 90) from the internal space of the bellows (4/8, 4/9) and possesses, in its cylindrical wall surface, an axial feed duct (79), lying at least approximately in the radial central plane of the discharge mouthpiece (20/8), which duct terminates within the annular wall portion (30/8) of the bellows (4/8, 4/9).

36. Metering and spray pump according to one of Claims 1, 11 to 21 or 27 to 34, characterized in that the annular wall portion (30/8), forming the valve component at the discharge end, is provided on its outer side with a peripheral annular sealing lip (80), which bears sealingly against the inner surface of the housing part (1/8, 1/9) provided with the discharge mouthpiece (20/8) and/or against an annular shoulder (81) of this housing part.

37. Metering and spray pump according to Claim 36, characterized in that the annular wall portion (30/9) is provided with an external, peripheral sealing rib (80/1), bearing axially in the compression direction of the bellows (4/9) on an annular rib (81/1) disposed on the inner side of the hollow body (5/9).

## Revendications

1. Pompe de dosage et d'atomisation pour la distribution de quantités dosées de matières liquides ou peu visqueuses à partir de récipients (3) sous forme de bouteilles ou de boîtes, comprenant un soufflet (4 à 4/9) en matière plastique élastique établissant la liaison entre deux éléments de boîtier (1, 1/1, 1/4, 1/6 à 1/9 ; 2, 2/1 à 2/9) réalisés en matière plastique indéformable qui peuvent être déplacés axialement et de manière télescopique l'un par rapport à l'autre entre deux limiteurs de course et ramenés en arrière par les forces de rappel axiales du soufflet (4 à 4/9), une soupape de pompe munie d'un organe de fermeture mobile étant disposée au moins à l'extrémité côté aspiration du soufflet (4 à 4/9) laquelle soupape s'ouvre automatiquement dans la direction d'aspiration pendant la course de pompage de l'un des éléments de boîtier (1, 1/1, 1/4, 1/6 à 1/9) et du soufflet (4 à 4/9) et se ferme dans la direction de retour, et un élément de boîtier (1, 1/1, 1/4, 1/6 à 1/9) étant muni d'un bec de distribution (20, 20/4, 20/6, 20/7, 20/8) et un élément de boîtier (2, 2/1 à 2/9) pouvant être emboîté, au moyen d'un élément de liaison (49, 89), sur le col du récipient ou étant équipé d'un récipient (3) conformé, **caractérisée en ce** que le soufflet (4 à 4/9) comprend à l'une de ses extrémités, en tant que prolongement axial, une section de paroi annulaire (30, 30/3, 30/6, 30/8) radialement élastique en forme de douille qui entoure la surface latérale (31) d'un appendice (24, 24/8, 24/9) en forme d'anneau ou de pot, conformé d'un seul tenant sur l'élément de boîtier (1, 1/1, 1/4, 1/6 à 1/9) qui effectue les courses de pompage, de façon à assurer l'étanchéité à la manière d'une soupape et à pouvoir être soulevée radialement ; et que l'autre extrémité du soufflet (4 à 4/9) comporte une section de paroi frontale (17 à 17/10) pourvue d'au moins une ouverture de passage (18, 18/3, 18/4, 18/5, 18/6, 18/8, 18/9), laquelle section recouvre à la manière d'une soupape au moins une ouverture de sortie (16, 16/1, 16/3, 16/8, 38, 58, 58/6, 58/7) d'une paroi frontale du boîtier (10/6, 10/7, 10/8, 12, 12/1) du second élément de boîtier (2, 2/1 à 2/9) ou forme le siège de soupape pour un organe de fermeture de soupape (92) conformé sur un corps déplaceur (91) disposé dans le soufflet (4/9).

2. Pompe de dosage et d'atomisation selon la revendication 1, caractérisée en ce que le soufflet (4, 4/2, 4/3, 4/4) en tant qu'élément de soupape présente, du côté aspiration, une section de paroi frontale annulaire (17) qui est munie d'une ouverture de passage centrale (18) et appliquée, dans la direction de retour, de manière étanche contre la face extérieure d'une paroi frontale de boîtier (12) munie d'une ou de plusieurs ouvertures de sortie (16, 16/1) et qui peut être dégagée plastiquement dans la direction d'aspiration et respectivement de distribution.

3. Pompe de dosage et d'atomisation selon l'une des revendications 1 ou 2, caractérisée en ce que, du côté aspiration, le soufflet (4/1) présente en tant qu'éléments de soupape mobiles plusieurs sections de paroi frontale (17/1) en forme de languettes qui recouvrent élastiquement et de manière étanche des ouvertures de sortie individuelles (16) de la paroi frontale (12/1) du boîtier.

4. Pompe de dosage et d'atomisation selon l'une des revendications 1 ou 2, caractérisée en ce que les ouvertures de sortie de la paroi frontale (12, 12/1) du boîtier sont disposées de manière excentrée, sous forme d'une pluralité d'ajours circulaires (16, 16/1), sur un rayon commun, et que l'ouverture de passage centrale (18) se situe à l'intérieur des ajours (16, 16/1).

5. Pompe de dosage et d'atomisation ·selon la revendication 2, caractérisée en ce que la section de paroi frontale (17) du soufflet (4, 4/2, 4/4) et une section annulaire (14, 14/1, 14/2) conformée sur la paroi frontale (12, 12/2, 12/4) du boîtier présentent une forme conique.

6. Pompe de dosage et d'atomisation selon la revendication 2, caractérisée en ce que la paroi frontale (12/3 du boîtier comporte une ouverture de sortie centrale (16/3) contre le bord de laquelle est appliquée de manière étanche et élastique une section de paroi frontale (17/3) centrale circulaire du soufflet (4/3) qui est entourée de plusieurs ouvertures de passage (18/3) en forme de segments et rattachée par des nervures radiales (41) à une section de paroi frontale annulaire (17/2).

7. Pompe de dosage et d'atomisation selon la revendication 1, caractérisée en ce que le soufflet (4/2) en tant qu'élément de soupape du côté aspiration comprend un tuyau de raccord (39) conformé en une seule pièce sur une section de paroi frontale (12) du soufflet (4/2) et dépassant du côté frontal dans ledit soufflet (4/2), lequel tuyau de raccord entoure de manière élastique et étanche une paroi annulaire (37) de la paroi frontale (14/2) du boîtier qui dépasse également du côté frontal dans le soufflet (4/2), est fermée par une paroi frontale (37/2) et comporte des ouvertures de passage radiales (38).

8. Pompe de dosage et d'atomisation selon l'une des revendications 2 ou 6, caractérisée en ce que la paroi frontale (12/4) du boîtier est munie d'une tubulure de raccordement de tuyau (55) dont l'alésage (58) est recouvert de manière élastique et étanche par une section de paroi frontale centrale (17/2) du soufflet laquelle est entourée d'ouvertures de passage (18/3) décalées radialement vers l'extérieur.

9. Pompe de dosage et d'atomisation selon la revendication 8, caractérisée en ce que la tubulure de raccordement de tuyau (55/1) présente du côté de la paroi frontale un élargissement conique (55/2) dans lequel s'emboîte de manière étanche une saillie de paroi frontale (17/6) en forme de nipple du soufflet (4/5).

10. Pompe de dosage et d'atomisation selon l'une des revendications 2, 4 ou 5, caractérisée en ce que la paroi frontale (12) du boîtier contre laquelle est appliquée une section de paroi frontale annulaire (17) du soufflet (4) présente, dans un certain secteur d'anneau des ouvertures de passage (16) de grand diamètre et, dans un autre secteur d'anneau, une ou plusieurs petites ouvertures de passage (16/1).

11. Pompe de dosage et d'atomisation selon la revendication 10, caractérisée en ce que, du côté sortie, la section de paroi annulaire (30) radialement élastique du soufflet (4 à 4/4) est conformée en tant que prolongement axial d'un collet annulaire (29) qui s'étend axialement à l'extérieur d'un épaulement annulaire (28) et est appliqué de manière étanche contre la face intérieure d'une tubulure (23) de l'élément de boîtier (1, 1/1, 1/2) muni du bec de distribution (20, 20/4), qui s'étend concentriquement par rapport à l'axe (25) du soufflet.

12. Pompe de dosage et d'atomisation selon la revendication 1, caractérisée en ce que l'appendice (24/1, 24/3) en forme de pot comprend au moins une surface d'appui plane (31/1) pour la section de paroi annulaire (30), qui est interrompue par un canal de refoulement (33/1) axial ou un évidement (33) en forme de fente.

13. Pompe de dosage et d'atomisation selon la revendication 1, caractérisée en ce que l'appendice (24/3) présente une section transversale sensiblement quadratique, et qu'au milieu d'au moins l'une des sections de paroi planes (24/2) est disposé un évidement (33) en forme de fente ou canal de refoulement (33/1).

14. Pompe de dosage et d'atomisation selon la revendication 13, caractérisée en ce que la tubulure (23) est frontalement appliquée de manière étanche contre l'épaulement annulaire (28) du soufflet (4, 4/1, 4/2, 4/3, 4/4).

15. Pompe de dosage et d'atomisation selon l'une des revendications 1 ou 14, caractérisée en ce que le bec de distribution (20, 20/4) et la tubulure (23) ainsi qu'un appendice (24) en forme de pot, de tourillon, d'anneau ou de douille présentant la paroi annulaire (31) sont conformés en une seule pièce sur l'élément de boîtier (1, 1/1, 1/2, 1/4), un canal (22) formé entre l'appendice (24) et la tubulure (23) communiquant avec le canal de sortie (21, 21/4) du bec de distribution (20, 20/4).

16. Pompe de dosage et d'atomisation selon l'une des revendications 1, 11, 14 ou 15, caractérisée en ce que la surface annulaire (31) située du côté distribution et entourée par la section de paroi annulaire (30) radialement élastique du soufflet (4, 4/1, 4/2, 4/3, 4/4) présente globalement une forme conique ou comporte une section conique (34, 34/1) qui dépasse dans la section de paroi annulaire (30) extensible.

17. Pompe de dosage et d'atomisation selon l'une des revendications 1 à 12, ou 15 à 16, caractérisée en ce que le diamètre intérieur de la section de paroi annulaire (30) formant un organe de soupape élastique mobile et respectivement du tuyau de raccord (39) du soufflet (4/2) est supérieur au diamètre extérieur de l'appendice (24) et respectivement de la paroi annulaire (37), et que la section de paroi annulaire (30) et respectivement le tuyau de raccord (39) présentent une section terminale (30/3 et respectivement 39/3) qui se rétrécit de manière conique dans la direction de distribution et respectivement d'aspiration, laquelle section terminale est appliquée, de manière étanche, linéairement ou sous la forme d'une étroite bande de surface annulaire contre la surface annulaire (31, 37/2) de l'appendice (24) et respectivement de la paroi annulaire (37) ou contre le bord annulaire (37/3) de la paroi annulaire (37).

18. Pompe de dosage et d'atomisation selon la revendication 17, caractérisée en ce que la section terminale conique (30/4, 39/3) de la section de paroi annulaire (30) et/ou du tuyau de raccord (39) présente un profil ondulé ou en zigzag et comporte une ouverture cylindrique dont la face intérieure est appliquée contre la surface latérale de l'appendice (24) et respectivement contre la surface latérale (37/2) de la paroi annulaire (37).

19. Pompe de dosage et d'atomisation selon l'une des revendications 1, 11 et 14 à 18, caractérisée en ce qu'une section partielle axiale de la paroi de l'appendice (24) dépassant dans la section de paroi annulaire (30) du soufflet (4), radialement élastique du côté sortie, est muni d'évidements (33) en forme de fentes qui, dans la direction de distribution axiale, se terminent à l'intérieur de la surface annulaire (31) entourée par la section de paroi annulaire (30) du soufflet (4).

20. Pompe de dosage et d'atomisation selon l'une des revendications 1, 11 et 14 à 19, caractérisée en ce que l'épaisseur de paroi du collet, annulaire (29) du soufflet (4, 4/1, 4/2, 4/3, 4/4) correspond à la largeur radiale du canal annulaire (22) constitué entre la tubulure (23) et l'appendice (24) en forme de pot, de tourillon, d'anneau ou de douille de l'élément de boîtier (1, 1/1, 1/2), et que le diamètre extérieur de la section de paroi élastique (30) qui entoure la surface annulaire (31) de l'appendice (24) est inférieur au diamètre intérieur de la tubulure (23).

21. Pompe de dosage et d'atomisation selon l'une des revendications 13 à 20, caractérisée en ce que la section de paroi annulaire élastique (30) du soufflet (4) présente, en tant qu'organe de soupape, au moins une saillie axiale (30/2) en forme de languette qui obture un évidement (33) en forme de fente ou un canal de refoulement (33/1) de l'appendice (24, 24/1).

22. Pompe de dosage et d'atomisation selon l'une des revendications 1 à 21, caractérisée en ce que l'intérieur du soufflet (4/6) communique, par l'intermédiaire de la ou des ouverture(s) de passage (18/6) disposée(s) dans la paroi frontale (17/8) du soufflet du côté aspiration ou par l'intermédiaire d'un canal de liaison (59) supplémentaire situé à proximité de la paroi frontale du boîtier, avec un bec de distribution (20/6) placé à côté du soufflet et présentant sensiblement une forme tubulaire.

23. Pompe de dosage et d'atomisation selon la revendication 22, caractérisée en ce que le bec de distribution (20/6) est constitué d'un porte-vent parallèle à l'axe fixé ou conformé en une seule pièce sur la cloison (10/7) du boîtier et muni d'un orifice de distribution (56) dirigé radialement vers l'extérieur.

24. Pompe de dosage et d'atomisation selon la revendication 23, caractérisée en ce qu'une paroi d'obturation (57) fermant l'orifice de distribution (56) est conformée en une seule pièce sur l'élément de boîtier (1/6) déplaçable par rapport au bec de distribution (20/6), et que cet élément de boîtier (1/6) comprend une paroi frontale (19/6) avec une ouverture qui enserre le bec de distribution (20/6).

25. Pompe de dosage et d'atomisation selon l'une des revendications 22 ou 23, caractérisée en ce qu'une section de paroi frontale (17/8) du soufflet (4/6) située du côté aspiration et appliquée de manière étanche contre un épaulement, annulaire (14/6) conique ou plan et lisse disposé sur la face extérieure d'une cloison frontale (10/6) du boîtier sur une bague d'appui (11/6), présente au centre un organe de fermeture de soupape (17/8) en forme de pot relié en un seul tenant à ladite section de paroi frontale par des nervures de liaison (41/6) élastiques, lequel forme avec la bague d'appui (11/6) un canal annulaire (63) qui communique d'une part avec le bec de distribution par l'intermédiaire d'un canal de liaison radial (59) et d'autre part, avec l'intérieur du soufflet (4/6) par l'intermédiaire des ouvertures de passage (18/6).

26. Pompe de dosage et d'atomisation selon l'une des revendications 22 à 25, caractérisée en ce que la section de paroi annulaire (30/6) en forme de douille du soufflet (4/6) située du côté distribution entoure, de manière étanche et sous une précontrainte radiale résistant à la pression de distribution, un appendice (24/7) en forme d'anneau, de pot ou de tube de l'élément, de boîtier mobile (1/7).

27. Pompe de dosage et d'atomisation selon l'une des revendications 1 à 10 ou 26, caractérisée en ce que le canal de distribution (21/7) du bec de distribution (20/7) sensiblement, dirigé radialement vers l'extérieur communique directement, avec l'intérieur d'un appendice (24/7) de forme tubulaire qui est ouvert du côté frontal dirigé vers le soufflet (4/6) et entouré sous une précontrainte résistant à la pression de distribution par une section de paroi annulaire (30/6) de soufflet (4/6) située du côté distribution.

28. Pompe de dosage et d'atomisation selon la revendication 27, caractérisée en ce que le canal de sortie (21/7) du bec de distribution (20/7) comprend, dans la région d'une section dirigée vers l'appendice, des éléments de retenue (68, 72) diminuant la section transversale qui augmentent la résistance à l'écoulement d'une matière pâteuse, en particulier dans la direction de reflux.

29. Pompe de dosage et d'atomisation selon l'une des revendications 1 à 22, caractérisée en ce que le soufflet (4/8, 4/9) comprend, entre l'un des deux organes de soupape (24/8, 17/9) et une partie pliable en zigzag du soufflet, une section de paroi extensible cylindrique (84) non pliable.

30. Pompe de dosage et d'atomisation selon la revendication 29, caractérisée en ce que la section de paroi extensible (84) non pliable du soufflet (4/8, 4/9) présente une épaisseur de paroi qui est supérieure à celle de la section de paroi annulaire (30/8) qui forme l'organe de soupape du côté distribution.

31. Pompe de dosage et d'atomisation selon l'une des revendications 29 ou 30, caractérisée en ce que le diamètre intérieur de la section de paroi extensible (84) est inférieur d'environ un tiers au diamètre intérieur de la section de paroi annulaire (30/8) qui forme l'organe de soupape du côté distribution.

32. Pompe de dosage et d'atomisation selon l'une des revendications 22 à 26 et 28 à 30, caractérisée en ce que l'appendice (24/8, 24/9) enserré par la section de paroi annulaire (30/8) du soufflet (4/8, 4/9) située du côté distribution présente un corps déplaceur (83) qui plonge au moins dans la partie pliable du soufflet (4/8).

33. Pompe de dosage et d'atomisation selon l'une des revendications 28 à 31, caractérisée en ce que dans le soufflet (4/9) est disposé un corps déplaceur mobile (91) déplaçable dans le sens axial dont le diamètre est inférieur au diamètre intérieur de la section de paroi extensible cylindrique (84) non pliable.

34. Pompe de dosage et d'atomisation selon l'une des revendications 32 ou 33, caractérisée en ce que le corps déplaceur est muni sur sa face frontale du côté aspiration d'un organe de fermeture de soupape (92) qui s'engage en l'obturant dans fine ouverture de passage centrale (10/8) de la cloison (10/8) du boîtier et/ou de la paroi frontale (17/10) du soufflet.

35. Pompe de dosage et d'atomisation selon l'une des revendications 29 à 34, caractérisée en ce que l'appendice (24/8, 24/9) enserré par la section de paroi annulaire (30/8) formant l'organe de soupape du côté distribution, est fermé par une paroi frontale (83/1, 90) par rapport à l'intérieur du soufflet (4/8, 4/9) et présente dans sa surface latérale un canal de refoulement axial (79) situé approximativement dans le plan médian du bec de distribution (20/8) et se terminant à l'intérieur de la section de paroi annulaire (30/8) du soufflet (4/8, 4/9).

36. Pompe de dosage et d'atomisation selon l'une des revendications 1, 11 à 21 ou 27 à 34, caractérisée en ce que la section de paroi annulaire (30/8) formant l'organe de soupape du côté distribution est munie sur sa face extérieure d'une lèvre l'étanchéité annulaire continue (80) qui est appliquée de manière étanche contre la face intérieure de l'élément de boîtier (1/8, 1/9) muni du bec de distribution (20/8) et/ou contre un épaulement annulaire (81) dudit élément de boîtier.

37. Pompe de dosage et d'atomisation selon la revendication 36, caractérisée en ce que la section de paroi annulaire (30/9) est munie à l'extérieur d'une nervure d'étanchéité (80/1) qui prend appui, axialement dans le sens de compression du soufflet (4/9), sur une nervure annulaire (81/1) disposée sur la face intérieure du corps creux (5/9).

Fig. 1

Fig. 2

Fig. 3

Fig. 4

Fig. 5

Fig. 6

Fig. 1a

Fig. 2a

Fig. 2b

Fig. 1c

Fig. 1b

Fig. 6a

Fig. 6b

Fig. 6c

Fig. 6d

Fig. 7

Fig. 8

Fig. 9

Fig. 10

Fig. 11

Fig. 12

Fig. 14

Fig. 13

Fig. 15

**Fig. 16**

**Fig. 17**

**Fig. 18**

**Fig. 19**

**Fig. 20**

**Fig. 21**

**Fig. 22**

**Fig. 24**

**Fig. 23**

Fig. 25

Fig. 27

Fig. 28

Fig. 26

Fig. 30

Fig. 29